(19) **Europäisches Patentamt European Patent Office Office européen des brevets**

(11) **EP 4 741 446 A1**

(12) **EUROPEAN PATENT APPLICATION**
published in accordance with Art. 153(4) EPC

(43) Date of publication:
**13.05.2026 Bulletin 2026/20**

(21) Application number: **24839666.5**

(22) Date of filing: **05.07.2024**

(51) International Patent Classification (IPC):
**C08J 3/12** (2006.01)    **C08F 2/44** (2006.01)
**C08F 8/00** (2006.01)    **C08F 20/06** (2006.01)

(52) Cooperative Patent Classification (CPC):
**C08F 2/44; C08F 8/00; C08F 20/06; C08J 3/12**

(86) International application number:
**PCT/JP2024/024366**

(87) International publication number:
**WO 2025/013774 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.07.2023 JP 2023112533**

(71) Applicant: **Nippon Shokubai Co., Ltd.**
**Osaka-shi, Osaka 541-0043 (JP)**

(72) Inventors:
• **TAKEDA, Daisuke**
  **Himeji-shi, Hyogo 671-1282 (JP)**
• **OGURA, Tadayuki**
  **Himeji-shi, Hyogo 671-1282 (JP)**
• **UEDA, Manabu**
  **Himeji-shi, Hyogo 671-1282 (JP)**

(74) Representative: **Ricker, Mathias**
**Wallinger Ricker Schlotter Tostmann**
**Patent- und Rechtsanwälte Partnerschaft mbB**
**Zweibrückenstraße 5-7**
**80331 München (DE)**

(54) **PARTICLE-LIKE WATER-ABSORBING AGENT COMPOSITION PRODUCTION METHOD, PARTICLE-LIKE WATER-ABSORBING AGENT COMPOSITION, AND ABSORBENT ARTICLE**

(57) A particulate water-absorbing agent composition having a high caking resistance performance can be obtained without deteriorating water-absorbing performance under pressure by a method for producing a particulate water-absorbing agent composition, the method including, in at least one step selected from a monomer aqueous solution preparation step, a polymerization step, and an optional hydrogel grinding step, adding a water-soluble polyalkylene glycol having a mass-average molecular weight of 3000 or less in an amount of from 0.01 mass% to 0.25 mass% with respect to a total mass of monomers contained in the monomer aqueous solution, and after the surface crosslinking step, adding a nonionic polymer having a polyalkylene glycol chain in a structure and having a mass-average molecular weight of from 300 to 15000 in an amount of from 0.02 mass% to 0.40 mass% with respect to a water-absorbent resin that has been surface-crosslinked.

**Description**

Technical Field

The present invention relates to a particulate water-absorbing agent composition production method, a particulate water-absorbing agent composition, and an absorbent article.

Background Art

A particulate water-absorbing agent composition (hereinafter, in the present specification, it may be simply referred to as "water-absorbing agent") containing a water-absorbent resin as a main component is used for absorbers contained in absorbent articles such as disposable diapers, sanitary napkins, and incontinence pads.

In the applications described above, the water-absorbing agent absorbs an aqueous liquid such as urine and swells to seal the aqueous liquid. Since the absorbent article is normally used in a state in which a weight is applied, the absorbent article is required to include a water-absorbing agent having high water-absorbing performance under pressure to improve the absorption performance of the absorbent article. Examples of a physical property value representing the water-absorbing performance under pressure of the water-absorbing agent include AAP (absorption against pressure) and FHA (fixed height absorption at a height of 20 cm).

Further, from the viewpoint of the handleability of the water-absorbing agent in the production of the absorbent article, the water-absorbing agent is also required to have high caking resistance performance. Physical properties indicating the caking resistance performance include B. R. (moisture absorption blocking ratio). As a method for reducing B. R., that is, improving caking resistance performance, a technique of adding inorganic fine particles such as silicon dioxide, kaolin, or alumina as an anti-caking agent with respect to the surface of a water-absorbent resin is known (Patent Documents 1 to 7). As an anti-caking agent other than inorganic fine particles, a technique of adding a polyvalent metal salt of an organic acid (Patent Document 8), various surfactants, or a hydrophobic polymer such as polysiloxane (Patent Documents 9 to 11) to the surface of a water-absorbent resin is also known.

A water-absorbent resin is generally obtained through polymerization, drying, and surface crosslinking after drying, and it is known that various surface modifiers are added during or after the surface crosslinking (Non-Patent Literature 1). Among these surface modifiers, the inorganic fine particles are widely used not only as an anti-caking agent but also for the purpose of improving physical properties such as liquid permeability and gel strength of a water-absorbent resin (Patent Documents 12 to 17).

Citation List

Patent Document

Patent Document 1: JP 2002-523526 T
Patent Document 2: JP 2001-137704 A
Patent Document 3: JP S59-080459 A
Patent Document 4: JP 2009-510177 T
Patent Document 5: JP 2000-093792 A
Patent Document 6: JP H11-286611 A
Patent Document 7: JP 2017-509757 T
Patent Document 8: JP 2004-261796 A
Patent Document 9: JP 2004-512165 T
Patent Document 10: WO 95/033558
Patent Document 11: JP 2003-082250 A
Patent Document 12: JP H06-016822 A
Patent Document 13: WO 2002/005949
Patent Document 14: JP 2003-225565 A
Patent Document 15: JP 2005-095759 A
Patent Document 16: WO 2008/015980
Patent Document 17: JP 2010-521577 T

Non-Patent Literature

Non-Patent Literature 1: Modern Superabsorbent Polymer Technology (1998) pp. 69 to 103

Summary of Invention

Technical Problem

However, the known surface modification technique described above has room for improvement in terms of providing a water-absorbing agent having high caking resistance performance without deteriorating water-absorbing performance under pressure.

An object of one aspect of the present invention is to provide a method for producing a water-absorbing agent having high caking resistance performance without deteriorating water-absorbing performance under pressure, a water-absorbing agent, and an absorbent article.

Solution to Problem

To solve the above problem, one aspect of the present invention includes the following configurations.

[1] A method for producing a particulate water-absorbing agent composition containing a poly(meth)acrylic acid (salt)-based water-absorbent resin, the method including:

a monomer aqueous solution preparation step of preparing a (meth)acrylic acid (salt)-based monomer aqueous solution;

a polymerization step of polymerizing the (meth)acrylic acid (salt)-based monomer aqueous solution;

as an optional step, a hydrogel grinding step of subjecting a resulting crosslinked hydrogel polymer to gel grinding during polymerization or after polymerization;

a drying step of drying a particulate hydrogel;

as optional steps, a pulverizing step and a classification step of pulverizing and classifying a dried polymer; and

a surface crosslinking step of performing surface crosslinking on a water-absorbent resin before surface crosslinking,

in which

the particulate hydrogel is obtained through the polymerization step or both the polymerization step and the hydrogel grinding step,

the dried polymer is obtained through the drying step,

the water-absorbent resin before surface crosslinking is the dried polymer or a water-absorbent resin obtained by pulverizing and/or classifying the dried polymer,

at least one step selected from the monomer aqueous solution preparation step, the polymerization step, and the optional hydrogel grinding step includes adding a water-soluble polyalkylene glycol having a mass-average molecular weight of 3000 or less in an amount of from 0.01 mass% to 0.25 mass% with respect to a total mass of monomers contained in the (meth)acrylic acid (salt)-based monomer aqueous solution, and

after the surface crosslinking step, a nonionic polymer having a polyalkylene glycol chain in a structure thereof and having a mass-average molecular weight of from 300 to 15000 is added in an amount of from 0.02 mass% to 0.40 mass% with respect to the water-absorbent resin that has been surface-crosslinked.

[2] The production method according to [1], in which the particulate water-absorbing agent composition has a surface tension of 45 mN/m or more.

[3] The production method according to [1], in which the particulate water-absorbing agent composition has an absorption against pressure (AAP) of 20 g/g or more under pressure of 0.7 psi.

[4] The production method according to [1], in which the particulate water-absorbing agent composition has a fixed height absorption (FHA) at a height of 20 cm of 20 g/g or more.

[5] A particulate water-absorbing agent composition including a poly(meth)acrylic acid (salt)-based water-absorbent resin as a main component and a nonionic polymer having a polyalkylene glycol chain in a structure, the particulate water-absorbing agent composition having a mass proportion of particles having a particle diameter of 300 $\mu$m or more and less than 850 $\mu$m of 50 mass% or more,

the particulate water-absorbing agent composition satisfying all of (1) to (4) shown below when:

(a) the nonionic polymer contained in the particulate water-absorbing agent composition is defined as A1, and a content of the nonionic polymer is defined as C1;

(b) the particulate water-absorbing agent composition is subjected to a predetermined impact test;

(c) the particulate water-absorbing agent composition that has been subjected to the impact test is sieved into a particle group a having a particle diameter of 300 μm or more and a particle group b having a particle diameter of less than 300 μm with a JIS standard sieve; and

(d) the nonionic polymer present in the particle group a is defined as A2, and a content of the nonionic polymer is defined as C2:

(1) A1 is a water-soluble polyalkylene glycol having a mass-average molecular weight of 3000 or less and a nonionic polymer having a polyalkylene glycol chain in the structure and having a mass-average molecular weight from 300 to 15000;

(2) A2 is a water-soluble polyalkylene glycol having a mass-average molecular weight of 3000 or less;

(3) C2 is 0.005 mass% or more and 0.15 mass% or less; and

(4) C1 - C2 is 0.02 mass% or more and 0.40 mass% or less.

[6] The particulate water-absorbing agent composition according to [5], the particulate water-absorbing agent composition having a surface tension of 45 mN/m or more.

[7] The particulate water-absorbing agent composition according to [5], the particulate water-absorbing agent composition having an absorption against pressure (AAP) of 20 g/g or more under pressure of 0.7 psi.

[8] The particulate water-absorbing agent composition according to [5], the particulate water-absorbing agent composition having a fixed height absorption (FHA) at a height of 20 cm of 20 g/g or more.

[9] The particulate water-absorbing agent composition according to [5], the particulate water-absorbing agent composition having a CRC of 25 g/g or more.

[10] The particulate water-absorbing agent composition according to [5], the particulate water-absorbing agent composition having a moisture absorption blocking rate <1> (B. R. <1>) of 80 mass% or less.

[11] The particulate water-absorbing agent composition according to [5], the particulate water-absorbing agent composition having a mass-average particle diameter (D50) of 300 μm or more and 600 μm or less.

[12] The particulate water-absorbing agent composition according to [5], in which a mass proportion of particles having a particle diameter of 850 μm or more in the particulate water-absorbing agent composition is 3 mass% or less, and a mass proportion of particles having a particle diameter of less than 150 μm is 5 mass% or less.

[13] An absorbent article including a particulate water-absorbing agent composition, the absorbent article including the particulate water-absorbing agent composition according to any one of [5] to [12] as the particulate water-absorbing agent composition.

Advantageous Effects of Invention

According to one aspect of the present invention, it is possible to provide a method for producing a particulate water-absorbing agent composition having high caking resistance performance without deteriorating water-absorbing performance under pressure, a method for producing an absorbent article, and a particulate water-absorbing agent composition.

Description of Embodiments

Hereinafter, embodiments of the present invention will be described in detail. The present invention is not limited to the embodiments, and various modifications can be made within the described range, and embodiments and examples obtained by appropriately combining technical means described in different embodiments and examples are also included in the technical scope of the present invention. In the present specification, a numerical range described as "from A to B" means "A or more and B or less" unless otherwise specified. "(Meth)acrylic" means "acrylic and/or methacrylic".

[1] Definition of Terms

(1-1) "Water-Absorbent Resin"

In the present specification, the "water-absorbent resin" means a water-swellable water-insoluble crosslinked polymer. Here, "water-swellable" means that the absorption rate under no pressure (also referred to as centrifuge retention capacity (CRC)) defined in NWSP 241.0. R2 (19) is 5 g/g or more, and "water-insoluble" means that the soluble content (Ext) defined in NWSP 270.0. R2 (19) is 50 mass% or less.

The "water-absorbent resin" is preferably a hydrophilic crosslinked polymer obtained by crosslinking and polymerizing a monomer composition containing (meth)acrylic acid (salt) as a main component. However, it is not necessary that the whole amount, that is, 100 mass%, is the hydrophilic crosslinked polymer, and an additive and the like added in any one or more steps of a step before a surface crosslinking step, the surface crosslinking step, and a step after the surface crosslinking step may be contained within a range satisfying the required performance of CRC, Ext, and the like. Further, in the present specification, the water-absorbent resin sometimes refers to an intermediate in a production process for the water-absorbent resin (for example, a crosslinked hydrogel polymer after polymerization, a dried polymer after drying, a water-absorbent resin before surface crosslinking, a water-absorbent resin after surface crosslinking, and a water-absorbent resin after granulation), and all of these are collectively referred to as "water-absorbent resin".

In the present specification, "poly(meth)acrylic acid (salt)-based water-absorbent resin" means a hydrophilic crosslinked polymer obtained by crosslinking and polymerizing a monomer composition containing (meth)acrylic acid (salt) as a main component.

In the present specification, the water-absorbent resin may refer to "a polymer in which only the inside is crosslinked, that is, a polymer in which the crosslinking density of the inside and the crosslinking density of the surface are substantially the same" or "a polymer in which the inside and the surface are crosslinked, that is, a polymer in which the crosslinking density of the surface is relatively high with respect to the crosslinking density of the inside". In the present specification, the "polymer in which only the inside is crosslinked" and the "polymer in which the inside and the surface are crosslinked" are both described as "water-absorbent resin" without distinction in principle. However, when it is necessary to clearly distinguish the presence or absence of surface crosslinking, the "polymer in which only the inside is crosslinked" is described as "water-absorbent resin before surface crosslinking" because it is a polymer obtained before surface crosslinking is performed, and the "polymer in which the inside and the surface are crosslinked" is described as "water-absorbent resin after surface crosslinking" or "water-absorbent resin in which surface crosslinking has been performed" because it is a polymer obtained after surface crosslinking is performed. The phrase "before surface crosslinking" means "before addition of a surface crosslinking agent" or "before start of a surface crosslinking reaction through heat treatment even after addition of a surface crosslinking agent".

(1-2) Particulate Water-Absorbing Agent Composition

In the present specification, the "particulate water-absorbing agent composition" means a composition containing the water-absorbent resin as a main component and containing various additives added after surface crosslinking as additional components. The phrase "containing a water-absorbent resin as a main component" means that the water-absorbent resin is contained preferably in an amount of 60 mass% or more and less than 100 mass%, more preferably in an amount of 70 mass% or more and less than 100 mass%, still more preferably in an amount of 80 mass% or more and less than 100 mass%, particularly preferably in an amount of 90 mass% or more and less than 100 mass%.

The "particulate water-absorbing agent composition" is a composition having a particulate shape (or powdery shape). The term "particulate" means having a form of particles, and the term "particle" means a solid or liquid granular small article having a measurable size (JIS Encyclopedia of Industrial Terms, 4th edition, page 2002).

The "particulate water-absorbing agent composition" in the present specification may be a particulate water-absorbing agent composition of a single particle or a particulate water-absorbing agent composition of an aggregate of a plurality of particles. In the present specification, the terms "particulate water-absorbing agent", "water-absorbing agent composition", or "water-absorbing agent" is sometimes used, but all of these terms are synonymous and mean a "particulate water-absorbing agent composition".

The "particulate water-absorbing agent composition" is an absorbent gelling agent for an aqueous liquid, and is preferably used as a material for absorbing an aqueous liquid in an absorbent article.

(1-3) "NWSP"

"NWSP" is an abbreviation for Non-Woven Standard Procedures-Edition 2019, which is a unified evaluation method for nonwoven fabrics and products thereof in Europe and the United States, issued by EDANA (European Disposables and Nonwovens Associates: European Nonwoven Fabric Association) and INDA (Association of the Nonwoven Fabrics Industry: North American Nonwoven Fabric Industry Associations) jointly. The NWSP also shows a standard method for measuring a water-absorbent resin. In the present specification, the physical properties of the water-absorbent resin and the particulate water-absorbing agent composition are measured in accordance with the original NWSP (2019). Unless otherwise specified in the present specification, methods for measuring various physical properties of the water-absorbent resin and the particulate water-absorbing agent composition follow the measurement methods in the following Examples.

[2] Method for Producing Particulate Water-Absorbing Agent Composition

In the known method (Patent Documents 1 to 7) in which inorganic fine particles are added to improve caking resistance performance at the time of moisture absorption, when inorganic fine particles such as silicon dioxide, kaolin, or alumina are added to the particle surface of a water-absorbent resin, the caking resistance performance is improved through surface modification such as improvement in fluidity of the absorbed particles and reduction in binding property between the particles. However, there is a problem that the water-absorbing performance under pressure of the resulting water-absorbing agent deteriorates. To this, the caking resistance performance can be improved without substantially deteriorating the water-absorbing performance under pressure of the resulting water-absorbing agent by adding a surfactant or a nonionic polymer containing a polyalkylene glycol chain in the structure to the water-absorbent resin after surface crosslinking as an anti-caking agent to cover the particle surface. However, there is a problem that the surfactant or the nonionic polymer containing a polyalkylene glycol chain in the structure has a small effect of improving caking resistance performance as compared with the inorganic fine particles.

In addition, in the known method, the addition of the anti-caking agent has been studied focusing exclusively on the covering of the particle surface of the water-absorbent resin from the viewpoint of surface modification. That is, it has been considered that when an anti-caking agent is added in a step (for example, a polymerization step) in which the anti-caking agent can be uniformly distributed inside the water-absorbent resin, the anti-caking agent is hardly present on the particle surface of the water-absorbent resin, and a desired effect of improving caking resistance performance cannot be achieved. Thus, the addition in the polymerization step and the like has not been studied.

As described above, known techniques for improving caking resistance performance have been studied focusing on covering of a water-absorbent resin on the particle surface, and various anti-caking agents have been proposed. However, none of the resulting water-absorbing agents can achieve both high caking resistance performance and maintenance of water-absorbing performance under pressure.

In the course of studies to solve such problems, the inventors of the present invention have focused on, for the first time, an additive to the inside of a water-absorbent resin, which has been considered to be irrelevant to caking resistance performance, in addition to surface modification of a water-absorbent resin with an anti-caking agent. The inventors of the present invention have succeeded in obtaining a water-absorbing agent composition that achieves both high caking resistance performance and maintenance of water-absorbing performance under pressure by adding a specific additive to the inside of a water-absorbent resin in addition to the addition of the specific additive to the particle surface of the water-absorbent resin.

That is, the present invention is based on the finding that when a nonionic polymer having a predetermined molecular weight and a predetermined amount and containing a polyalkylene glycol chain in the structure is added to a water-absorbent resin after surface crosslinking (that is, a water-absorbent resin in which a specific additive is present inside the particles) obtained by polymerizing an ethylenically unsaturated monomer in the presence of a water-soluble polyalkylene glycol having a predetermined molecular weight and a predetermined amount (that is, a specific additive is added to the particle surface), the effect of improving caking resistance performance with the nonionic polymer is surprisingly enhanced to a large extent as compared with the case where the water-soluble polyalkylene glycol is not added. It was also found that the obtained water-absorbing agent is hardly deteriorated in water-absorbing performance under pressure.

That is, a method for producing a particulate water-absorbing agent composition according to one embodiment of the present invention is a method for producing a particulate water-absorbing agent composition containing a poly(meth) acrylic acid (salt)-based water-absorbent resin, the method including: a monomer aqueous solution preparation step of preparing a (meth)acrylic acid (salt)-based monomer aqueous solution; a polymerization step of polymerizing the (meth) acrylic acid (salt)-based monomer aqueous solution; as an optional step, a hydrogel grinding step of subjecting a resulting crosslinked hydrogel polymer to gel grinding during polymerization or after polymerization; a drying step of drying a particulate hydrogel; as optional steps, a pulverizing step and a classification step of pulverizing and classifying a dried polymer; and a surface crosslinking step of performing surface crosslinking on a water-absorbent resin before surface crosslinking, in which at least one step selected from the monomer aqueous solution preparation step, the polymerization step, and the optional hydrogel grinding step includes adding a water-soluble polyalkylene glycol having a mass-average molecular weight of 3000 or less in an amount of from 0.01 mass% to 0.25 mass% with respect to a total mass of monomers contained in the (meth)acrylic acid (salt)-based monomer aqueous solution (hereinafter, the "(meth)acrylic acid (salt)-based monomer aqueous solution" may be simply referred to as "monomer aqueous solution"), and after the surface crosslinking step, a nonionic polymer containing a polyalkylene glycol chain in a structure thereof and having a mass-average molecular weight of from 300 to 15000 is added in an amount of from 0.02 mass% to 0.40 mass% with respect to the water-absorbent resin that has been surface-crosslinked.

According to the production method, a water-absorbing agent having high caking resistance performance can be obtained without deteriorating the water-absorbing performance under pressure.

That is, by using the water-absorbent resin after surface crosslinking, which is produced by adding the water-soluble polyalkylene glycol having the mass-average molecular weight and the amount described above in at least one step selected from the monomer aqueous solution preparation step, the polymerization step, and the hydrogel grinding step, the effect of improving caking resistance performance through the addition of the nonionic polymer when the nonionic polymer having the mass-average molecular weight and the amount and containing a polyalkylene glycol chain in the structure is added to the water-absorbent resin after surface crosslinking can be greatly enhanced as compared with the case where the water-soluble polyalkylene glycol is not added.

Here, examples of the physical property value indicating the caking resistance performance of the water-absorbing agent include a moisture absorption blocking ratio (B. R.). In the present disclosure, the moisture absorption blocking ratio is a value calculated by the method described in Examples. As the moisture absorption blocking ratio of the water-absorbent resin and the water-absorbing agent is lower, the water-absorbent resin and the water-absorbing agent are more excellent in caking resistance performance. It can be said that the effect of improving caking resistance performance through the addition of the nonionic polymer is larger as the B. R. of the water-absorbing agent obtained through the addition of the nonionic polymer is more greatly decreased from the B. R. of the water-absorbent resin after surface crosslinking before the addition of the nonionic polymer. More specifically, the larger the value ($\Delta$B. R. described later) obtained by subtracting the B. R. of the water-absorbing agent obtained by adding the nonionic polymer from the B. R. of the water-absorbent resin after surface crosslinking before the addition of the nonionic polymer, the larger the effect of improving caking resistance performance.

Examples of physical property values indicating the water-absorbing performance under pressure of the water-absorbing agent and the water-absorbent resin include absorption against pressure (AAP) and fixed height absorption at a height of 20 cm (FHA). In the present disclosure, AAP and FHA are values calculated by the method described in Examples.

[2-1] Monomer Aqueous Solution Preparation Step

The present step is a step of preparing an aqueous solution of a raw material (monomer composition; preferably, (meth)acrylic acid (salt) is contained as a main component, and at least one internal crosslinking agent is contained) for forming a water-absorbent resin (polymer). A slurry liquid of the monomer composition may be used, but an aqueous solution of the monomer composition will be described in the present specification for convenience.

Monomer

The monomer used in the present step is a raw material component (monomer) for forming a water-absorbent resin (polymer), and preferably contains (meth)acrylic acid (salt), a monomer other than (meth)acrylic acid (salt), and an internal crosslinking agent. That is, the entire monomer forming the water-absorbent resin is a monomer composition.

In the present specification, the term "(meth)acrylic acid (salt)" means (meth)acrylic acid and/or a salt thereof, and the term "monomer composition containing (meth)acrylic acid (salt) as a main component" means a monomer composition containing (meth)acrylic acid (salt) in an amount of 50 mol% or more, more preferably 70 mol% or more, still more preferably 90 mol% or more, and preferably 100 mol% or less, more preferably substantially 100 mol%, with respect to the total amount of monomers excluding a crosslinking agent.

In the present specification, "(meth)acrylic acid (salt)-based monomer aqueous solution" means an aqueous solution of a monomer composition containing (meth)acrylic acid (salt) as a main component and containing at least one internal crosslinking agent.

As the monomer other than the (meth)acrylic acid (salt), a monomer containing an acid group is preferable among monomers having an unsaturated double bond (ethylenically unsaturated monomers). Specific examples of the monomer include anionic unsaturated monomers such as maleic acid (maleic anhydride), fumaric acid, crotonic acid, itaconic acid, cinnamic acid, vinyl sulfonic acid, allyl toluene sulfonic acid, vinyl toluene sulfonic acid, styrene sulfonic acid, 2-(meth)acrylamide-2-methylpropane sulfonic acid, 2-(meth)acryloyl ethane sulfonic acid, 2-(meth)acryloyl propane sulfonic acid, and 2-hydroxyethyl (meth)acryloyl phosphate, and/or salts thereof. One of, or two or more of these monomers are used as necessary.

Examples of the salt include an alkali metal salt, an ammonium salt, and an amine salt. A sodium salt, a potassium salt, a lithium salt, and an ammonium salt are more preferable, and a sodium salt is particularly preferable.

The monomer composition containing (meth)acrylic acid (salt) as a main component is preferably neutralized in the range of from 10 mol% to 90 mol%, more preferably neutralized in the range of from 40 mol% to 80 mol%, and particularly preferably neutralized in the range of from 60 mol% to 75 mol%.

Thus, the monomer composition containing (meth)acrylic acid (salt) as a main component is preferably neutralized with a neutralizing solution containing a hydroxide of an alkali metal such as sodium hydroxide, potassium hydroxide, or lithium hydroxide, a carbonate (hydrogen) salt such as sodium carbonate or potassium carbonate (hydrogen), or a basic compound such as ammonia, and particularly preferably neutralized with a neutralizing solution containing sodium hydroxide.

As necessary, the monomer composition may contain "a hydrophilic or hydrophobic unsaturated monomer (hereinafter, referred to as "additional monomer")" in addition to the "(meth)acrylic acid (salt)" and the "monomer other than (meth)acrylic acid (salt)" described above. Examples of the additional monomer include mercaptan group-containing unsaturated monomers; phenolic hydroxyl group-containing unsaturated monomers; amide group-containing unsaturated monomer such as N-vinyl-2-pyrrolidone, N-vinylacetamide, (meth)acrylamide, N-isopropyl(meth)acrylamide, N-ethyl(meth)acrylamide, and N,N-dimethyl(meth)acrylamide; and amino group-containing unsaturated monomers such as N,N-dimethylaminoethyl (meth)acrylate, N,N-dimethylaminopropyl (meth)acrylate, and N,N-dimethylaminopropyl (meth)acrylamide. The amount of the additional monomer to be used is not particularly limited as long as the physical properties of the resulting water-absorbent resin are not impaired, and is specifically 50 mol% or less, more preferably 20 mol% or less with respect to the portion of the monomer composition excluding the internal crosslinking agent.

Neutralization with Basic Compound

In one embodiment of the present invention, the (meth)acrylic acid (salt) is preferably partially neutralized using the basic compound described above. That is, in one embodiment of the present invention, it is preferable to obtain a water-absorbent resin in which an acid group of poly(meth)acrylic acid is partially neutralized.

The basic compound is preferably an aqueous solution from the viewpoint of handleability.

The neutralization may be performed before polymerization, during polymerization, or after polymerization, and the neutralization may be performed at a plurality of times or in a plurality of times. From the viewpoint of the production efficiency of the water-absorbent resin, it is preferable to neutralize the water-absorbent resin continuously.

In one embodiment of the present invention, the neutralization percentage of (meth)acrylic acid (salt) is, as described above, preferably 10 mol% or more, more preferably 40 mol% or more, still more preferably 50 mol% or more, particularly preferably 60 mol% or more, and is preferably 90 mol% or less, more preferably 85 mol% or less, still more preferably 80 mol% or less, particularly preferably 75 mol% or less, with respect to the acid groups of the monomer composition. By setting the neutralization percentage in the range, a decrease in water-absorbing performance of the water-absorbent resin and the water-absorbing agent can be suppressed. The neutralization percentage is applied to any of the neutralization before polymerization, during polymerization, and after polymerization described above. The same applies to the water-absorbent resin and the water-absorbing agent.

Internal Crosslinking Agent

Examples of the internal crosslinking agent used in the present step include N,N'-methylenebis(meth)acrylamides, (poly)ethylene glycol di(meth)acrylates, (poly)propylene glycol di(meth)acrylates, trimethylolpropane di(meth)acrylates, trimethylolpropane tri(meth)acrylates, glycerin tri(meth)acrylates, glycerin acrylate methacrylates, ethylene oxide-modified trimethylolpropane tri(meth)acrylates, pentaerythritol tetra(meth)acrylates, dipentaerythritol hexa(meth)acrylates, triallyl cyanurate, triallyl isocyanurate, triallyl phosphate, triallylamine, poly(meth)allyloxyalkanes, (poly)ethylene glycol diglycidyl ethers, glycerol diglycidyl ether, ethylene glycol, polyethylene glycols, propylene glycols, glycerin, pentaerythritol, ethylenediamine, polyethyleneimines, and glycidyl (meth)acrylates. Among these internal crosslinking agents, at least one internal crosslinking agent is selected in consideration of reactivity and the like.

In one embodiment of the present invention, an internal crosslinking agent having two or more polymerizable unsaturated groups is preferably selected, and an internal crosslinking agent having two or more polymerizable unsaturated groups having a (poly)alkylene glycol structure is more preferably selected, from the viewpoint of water-absorbing performance of the water-absorbent resin and the water-absorbing agent, and the like. Specific examples of the polymerizable unsaturated group include an allyl group and a (meth)acrylate group. Among these, a (meth)acrylate group is preferable. Examples of the internal crosslinking agent having two or more polymerizable unsaturated groups having a (poly)alkylene glycol structure include polyethylene glycol di(meth)acrylate. The number of alkylene glycol units (hereinafter, denoted as "n") is preferably 1 or more, more preferably 2 or more, still more preferably 4 or more, particularly preferably 6 or more, and is preferably 100 or less, more preferably 50 or less, still more preferably 20 or less, particularly preferably 10 or less.

The amount of use of the internal crosslinking agent is preferably 0.0001 mol% or more, more preferably 0.001 mol% or more, still more preferably 0.01 mol% or more, and preferably 10 mol% or less, more preferably 5 mol% or less, still more preferably 1 mol% or less, with respect to the monomer composition excluding the internal crosslinking agent. By setting the amount used in this range, a water-absorbent resin and a water-absorbing agent having desired water-absorbing performance are obtained. On the other hand, when the amount of use is out of the range, the water-soluble content may increase and/or the absorption ratio may decrease as the gel strength decreases.

In one embodiment of the present invention, the timing of adding the internal crosslinking agent may be any timing as long as the polymer can be uniformly crosslinked, and examples thereof include a method of adding an internal crosslinking agent to an aqueous solution of the monomer composition before polymerization or to a hydrogel during polymerization or after polymerization. Among these, a method of adding a predetermined amount of an internal crosslinking agent to an aqueous solution of the monomer composition in advance is preferable.

Additional Substances Added to Aqueous Solution of Monomer Composition

In one embodiment of the present invention, from the viewpoint of improving the physical properties of the water-absorbent resin and the water-absorbing agent, the following additional substances can be added to the aqueous solution of the monomer composition, to the solution during the reaction, or to the solution after the reaction, at any one or more of the timings of at the time of preparing the aqueous solution of the monomer composition, during the polymerization reaction and the crosslinking reaction, or after the polymerization reaction and the crosslinking reaction.

Examples of the additional substances include hydrophilic polymers such as starch, starch derivatives, cellulose, cellulose derivatives, polyvinyl alcohol (PVA), polyacrylic acid (salt), crosslinked products of existing polyacrylic acid (salt); and compounds such as carbonates, azo compounds, foaming agents that generate various bubbles, surfactants, chelating agents, and chain transfer agents.

Use of the hydrophilic polymer makes it possible to obtain a water-absorbent resin to which the hydrophilic polymer is grafted. For example, a polyacrylic acid (salt)-based water-absorbent resin to which starch is grafted and a water-absorbent resin to which PVA is grafted are obtained.

The addition amount of the additional substances is adjusted so as not to hinder the effect of the present invention. For example, the addition amount is preferably 50 mass% or less, more preferably 20 mass% or less, still more preferably 10 mass% or less, particularly preferably 5 mass% or less in total with respect to the aqueous solution of the monomer composition (monomer aqueous solution), and is preferably 0 mass% or more, more preferably more than 0 mass%.

Concentration of Monomer Component

The monomer composition, the polyalkylene glycol described in "[2-4] Addition of Water-Soluble Polyalkylene Glycol" to be described later, and each of the substances and components described above (referred to as "monomer components" in this section) are variously selected according to the purpose, and the respective amounts are defined so as to satisfy the above ranges and mixed with each other, whereby an aqueous solution in which the monomer components are summed (that is, the monomer composition, each of the substances described in "[2-4] Addition of Water-Soluble Polyalkylene Glycol" to be described later, and a mixture of each of the components) is prepared. In one embodiment of the present invention, in addition to the aqueous solution in which the monomer components are summed, a mixed solution of the aqueous solution in which the monomer components are summed and the hydrophilic solvent can be used.

The total concentration of the monomer components is preferably 10 mass% or more, more preferably 20 mass% or more, still more preferably 30 mass% or more, and preferably 80 mass% or less, more preferably 75 mass% or less, still more preferably 70 mass% or less, from the viewpoint of the physical properties of the water-absorbent resin and the water-absorbing agent. The total concentration of the monomer components can be determined by summing the concentrations of the respective monomer components. The concentration of each monomer component is calculated from Formula (A) described below;

$$\text{Concentration (mass\%) of monomer component} = [(\text{mass of monomer component})/(\text{mass of aqueous solution obtained by summing monomer components})] \times 100 \qquad \text{Formula (A)}$$

In Formula (A), the "mass of aqueous solution obtained by summing the monomer components" does not include the mass of the hydrophobic organic solvent in the reversed-phase suspension polymerization.

[2-2] Polymerization Step

The present step is a step of polymerizing the (meth)acrylic acid (salt)-based monomer aqueous solution to obtain a crosslinked hydrogel polymer (hereinafter, simply referred to as "hydrogel"). That is, it is a step of polymerizing the monomer aqueous solution containing the monomer containing (meth)acrylic acid (salt) as a main component and at least one internal crosslinking agent obtained in the monomer aqueous solution preparation step to obtain a hydrogel.

Polymerization Initiator

As the polymerization initiator used in one embodiment of the present invention, one, or two or more polymerization initiators can be selected and used from among polymerization initiators used in the production of normal water-absorbent resins depending on the type of monomer to be polymerized, polymerization conditions, and the like. Examples of the polymerization initiator include a thermal decomposition type initiator and a photo-decomposition type initiator.

Examples of the thermal decomposition type initiator include persulfates such as sodium persulfate, potassium persulfate, and ammonium persulfate; peroxides such as hydrogen peroxide, t-butyl peroxide, and methyl ethyl ketone peroxide; and azo compounds such as an azonitrile compound, an azoamidine compound, a cyclic azoamidine compound, an azoamide compound, an alkylazo compound, 2,2'-azobis(2-amidinopropane)dihydrochloride, and 2,2'-azobis[2-(2-imidazoline-2-yl)propane]dihydrochloride.

Examples of the photo-decomposition type initiator include benzoin derivatives, benzyl derivatives, acetophenone derivatives, benzophenone derivatives, and azo compounds.

Among these, persulfates are preferable in consideration of cost and the ability to reduce residual monomers. A reducing agent that promotes the decomposition of the oxidizing polymerization initiator such as the persulfate or the peroxide can be used in combination, and both can be combined to form a redox-based initiator. Examples of the reducing agent include (heavy) sulfite (salt) such as sodium sulfite and sodium bisulfite, reducing metals (salts) such as L-ascorbic acid (salt) and ferrous salts, and amines.

The amount of use of the polymerization initiator is preferably 0.001 mol% or more, more preferably 0.010 mol% or more, and preferably 1.000 mol% or less, more preferably 0.500 mol% or less, still more preferably 0.100 mol% or less, with respect to the monomer excluding the internal crosslinking agent. The amount of use of the reducing agent is preferably 0.0001 mol% or more, more preferably 0.0005 mol% or more, and preferably 0.0200 mol% or less, more preferably 0.0150 mol% or less, with respect to the monomer excluding the internal crosslinking agent. By setting the amount used in this range, a water-absorbent resin and a water-absorbing agent having desired water-absorbing performance are obtained.

In one embodiment of the present invention, the polymerization reaction may be started by irradiation with an active energy ray such as a radiation, an electron beam, or an ultraviolet ray. Irradiation with an active energy ray and the polymerization initiator may be used in combination.

Polymerization Form

Examples of the polymerization form applied to one embodiment of the present invention include aqueous solution polymerization, reversed-phase suspension polymerization, spray polymerization, droplet polymerization, bulk polymerization, and precipitation polymerization. Among these, aqueous solution polymerization or reversed-phase suspension polymerization is preferably selected, and aqueous solution polymerization is more preferably selected from the viewpoint of ease of polymerization control and water-absorbing performance of the water-absorbent resin and the water-absorbing agent. The aqueous solution polymerization is described in JP H4-255701 A and the like. The reversed-phase suspension polymerization is described in WO 2007/004529, WO 2012/023433, and the like.

Preferable forms of the continuous aqueous solution polymerization include high-temperature initiation polymerization, high-concentration polymerization, and foaming polymerization. The term "high-temperature initiation polymerization" means a polymerization form in which the temperature of the monomer aqueous solution at the time of initiation of polymerization is preferably 35°C or more, more preferably 40°C or more, still more preferably 45°C or more, particularly preferably 50°C or more, and preferably a temperature equal to or less than the boiling point of the monomer aqueous solution. The "high-concentration polymerization" means a polymerization form in which the monomer concentration at the start of polymerization is preferably 30 mass% or more, more preferably 35 mass% or more, still more preferably 40 mass% or more, particularly preferably 45 mass% or more, and is preferably a concentration equal to or less than the saturated concentration of the monomer aqueous solution. The "foaming polymerization" means a polymerization form in which the monomer aqueous solution with a foaming agent or air foam is polymerized. One of these polymerization forms may be performed alone, or two or more thereof may be performed in combination. The polymerization form of the aqueous solution polymerization may be a batch type or a continuous type, and is preferably a continuous type from the viewpoint of production efficiency. As a polymerization form applied to one embodiment of the present invention, a polymerization form in which a polymerization reaction is quickly started after addition of a polymerization initiator is preferable. As the polymerization form, for example, a polymerization form in which a polymerization reaction is initiated within 1 minute after a polymerization initiator is added is preferable. As the polymerization form, a polymerization form in which the completion of the polymerization reaction is also quickly completed is preferable. As the polymerization form, for example, a polymerization form in which the polymerization reaction is completed within 1 minute after the polymerization reaction is started is preferable.

Examples of the continuous-type aqueous solution polymerization described above include continuous belt polymerization described in US 4893999, US 6906159, US 7091253, US 7741400, US 8519212, JP 2005-36100 A, and the like, and continuous kneader polymerization described in US 6987151, and the like.

Examples of the method for dispersing bubbles in the foaming polymerization include a method in which a gas dissolved in the monomer aqueous solution is dispersed as bubbles by decreasing the solubility, a method in which a gas is introduced from the outside and dispersed as bubbles, and a method in which a foaming agent is added to the monomer aqueous solution and foaming is performed. The dispersion method may be appropriately used in combination depending on the physical properties of the target water-absorbent resin and water-absorbing agent.

When a gas is introduced from the outside, examples of the gas include oxygen, air, nitrogen, carbon dioxide, ozone, and a mixed gas of these gases. From the viewpoint of polymerizability and cost, an inert gas such as nitrogen or carbon dioxide is preferably used, and nitrogen is more preferably used.

Examples of the foaming agent that can be used include an azo compound, an organic or inorganic carbonate solution, a dispersion liquid, and a powder having a particle diameter of 0.1 μm or more and 1000.0 μm or less. Among these, inorganic carbonates are preferable, and specifically, carbonates such as sodium carbonate, ammonium carbonate, and magnesium carbonate, and hydrogen carbonate can be used.

Gel grinding of the hydrogel in a foamed shape obtained through foaming polymerization facilitates drying. By making the water-absorbent resin into a foamed shape, the water absorption rate of the water-absorbent resin and the water-absorbing agent can be improved, and further, fixation to the absorbent article becomes easy. The foamed shape can be determined by confirming, with an electron microscope, pores on the surface of the water-absorbent resin, for example, pores having a diameter of 1 μm or more and 100 μm or less. The number of pores is preferably 1 or more, more preferably 10 or more, and preferably 10000 or less, more preferably 1000 or less, per 1 particle of the water-absorbent resin, and can be controlled by adjusting the conditions in the foaming polymerization.

[2-3] Hydrogel Grinding Step

The present step is an optional step that is performed in the middle of the polymerization step and/or after the polymerization step for grinding the hydrogel to obtain a hydrogel in a particulate shape. Specifically, the hydrogel may be ground in the polymerization step, or the hydrogel may be ground after the polymerization step. That is, the present step is a step of performing gel grinding on the hydrogel to obtain a hydrogel having a particulate shape (hereinafter, referred to as "particulate hydrogel"). To distinguish from "pulverizing" in the pulverizing step described later, the present step is referred to as "gel grinding". The object to be subjected to gel grinding is not only the hydrogel obtained in the polymerization step, but also a granulated gel obtained by mixing a fine powder recovered in the classification step described later and an aqueous liquid may be included unless otherwise specified. The other steps are also intended to be the same unless otherwise specified.

The gel grinding means that the hydrogel is adjusted to a predetermined size using a screw extruder such as a kneader or a meat chopper, or a gel grinding apparatus such as a cutter mill.

When the hydrogel is subjected to gel grinding, it is preferable to add warm water and/or water vapor to the gel grinding apparatus. Addition of warm water and/or water vapor is preferable because a particulate hydrogel having low adhesiveness and good air permeability is obtained, and thus, drying is facilitated. The temperature of the warm water is preferably 40°C or more, more preferably 50°C or more, still more preferably 60°C or more, and preferably 100°C or less.

Regarding the embodiment of gel grinding, operating conditions, and the like, in the aqueous solution polymerization, a method described in conjunction with the document describing continuous aqueous solution polymerization is adopted. The contents described in WO 2011/126079 are also preferably applied to one embodiment of the present invention. When the polymerization form is kneader polymerization, the polymerization step and the gel grinding step are performed simultaneously. By undergoing the gel grinding step in one embodiment of the present invention, a water-absorbent resin in an irregularly crushed shape can be obtained.

The method for producing a particulate water-absorbing agent composition according to one embodiment of the present invention may include a granulation step of mixing the fine powder recovered in the classification step described later with an aqueous liquid to obtain a granulated gel and a granulated gel addition step of adding the granulated gel to the hydrogel in at least one step from the end of the gel grinding step to the completion of drying in the drying step and/or between the steps. In addition, in the gel grinding step of the present invention, it is preferable to appropriately control the gel grinding energy. The particulate hydrogel obtained through gel grinding with the following predetermined gel grinding energy also has an improved water absorption rate, for example, FSR described in WO 2009/016055 and evaluation with Vortex method described in JISK7224 (1996) "Water absorption rate test method for high water-absorbent resin" in physical properties of the water-absorbent resin and the water-absorbing agent to be obtained thereafter.

Here, the "Gel Grinding Energy" refers to unit energy required by a gel grinding apparatus when a hydrogel is subjected to gel grinding, that is, mechanical energy per unit mass of the hydrogel, and does not include energy for heating and cooling a jacket and energy of input water and steam. The "Gel Grinding Energy" is abbreviated to "GGE".

GGE is calculated from Formula (I) described below when the gel grinding apparatus is driven by three-phase AC power;

GGE [J/g] = {√3 × voltage × current × power factor × motor efficiency}/{mass of hydrogel introduced into gel grinding apparatus in 1 second}                    Formula (I)

The "power factor" and the "motor efficiency" are values that vary depending on the operating conditions of the gel grinding apparatus and are specific to the gel grinding apparatus, and the values thereof are 0 or more and 1 or less. These values can be known by making inquiries to the device manufacturer and the like. In addition, when the gel grinding apparatus is driven by single-phase AC power, the GGE can be calculated by changing "√3" in Formula (I) described above to "1". The unit of voltage is [V], the unit of current is [A], and the unit of mass of the hydrogel is [g/s].

The "power factor" and the "motor efficiency" in the GGE are values during gel grinding. The power factor and the motor efficiency during the idling operation are approximately defined as in Formula (I) because the current value during the idling operation is small. The "mass of the hydrogel to be charged into the gel grinding apparatus in 1 second" [g/s] in Formula (I) refers to a value converted to [g/s] when the hydrogel is continuously supplied by a quantitative feeder, for example. However, as described later, the hydrogel may include a recycled granulated gel.

In one embodiment of the present invention, the gel grinding energy (GGE) for gel grinding is preferably 100 J/g or less, more preferably 80 J/g or less, still more preferably 60 J/g or less, and preferably 20 J/g or more, more preferably 25 J/g or more, still more preferably 30 J/g or more. By controlling the gel grinding energy within the range described above, gel grinding can be performed while applying an appropriate shear/compressive force to the hydrogel.

When gel grinding is performed by a plurality of apparatuses, such as the use of a screw extruder after kneader polymerization or the use of a plurality of screw extruders, the total of the energy consumed by each apparatus is defined as the gel grinding energy (GGE).

In addition, when the gel grinding energy is controlled as described above, a more excellent effect can be obtained by performing the control in combination with the addition of warm water at the temperature described above. Further, after normal gel grinding, gel grinding based on the gel grinding energy may be performed.

The particle diameter of the particulate hydrogel granulated through the gel grinding step is preferably in the range of 0.100 mm or more and 10.000 mm or less from the viewpoint of ease of drying and physical properties of the resulting water-absorbent resin and water-absorbing agent. The mass-average particle diameter (D50) of the particulate hydrogel is preferably from 0.100 mm to 5.000 mm, more preferably from 0.100 mm to 2.000 mm. When the mass-average particle diameter (D50) of the particulate hydrogel is in the range described above, drying is sufficiently performed. In one embodiment of the present invention, the mass-average particle diameter of the hydrogel subjected to the drying step is preferably within the range described above, and more preferably satisfies both the particle diameter and the mass-average particle diameter.

As the particle size of the particulate hydrogel, the logarithmic standard deviation ($\sigma\zeta$) indicating the narrowness of the particle size distribution is preferably from 0.20 to 1.50, more preferably from 0.20 to 1.30, still more preferably from 0.20 to 1.20. The logarithmic standard deviation ($\sigma\zeta$) of the particle size distribution indicates the narrowness of the particle size distribution, and there is an advantage that the smaller the value, the more uniform the particle diameter, and the more uniformly the particles can be dried. However, to set the logarithmic standard deviation ($\sigma\zeta$) of the particle size distribution to less than 0.20, special operations such as classification of the particulate hydrogel after gel grinding are required, and thus it is substantially difficult to set the logarithmic standard deviation to less than 0.20 from the viewpoint of productivity and cost. The mass-average particle diameter (D50) and the logarithmic standard deviations ($\sigma\zeta$) of the particulate hydrogel are measured by, for example, the method described in WO 2021/140905.

In addition, for uniform and efficient drying, the water content of the particulate hydrogel is preferably 30 mass% or more, more preferably 45 mass% or more, and preferably 70 mass% or less, more preferably 55 mass% or less.

[2-4] Addition of Water-Soluble Polyalkylene Glycol

In the method for producing a particulate water-absorbing agent composition according to one embodiment of the present invention, a water-soluble polyalkylene glycol having a mass-average molecular weight of 3000 or less is added in an amount of 0.01 mass% to 0.25 mass% with respect to the total mass of monomers contained in the monomer aqueous solution in at least one step selected from the monomer aqueous solution preparation step, the polymerization step, and the optional hydrogel grinding step described above.

Examples of the polyalkylene glycol include a polyalkylene glycol having a structure represented by General Formula (1) described below.

$$H\text{-}(OR)_n\text{-}OH \qquad (1)$$

In General Formula (1), R is an alkylene group having from 2 to 4 carbon atoms, and may be linear or branched. The average value of n is preferably from 4 to 70, more preferably from 4 to 50, still more preferably from 6 to 15.

In General Formula (1), the oxyalkylene groups (-OR-) in one molecule may be the same or may contain two or more oxyalkylene groups. More specifically, examples of the polyalkylene glycol include polyethylene glycol, polypropylene glycol, a polyethylene glycol-polypropylene glycol copolymer, and a polyethylene glycol-polypropylene glycol-polybutylene glycol copolymer. One of these polyalkylene glycols may be used alone, or two or more thereof may be used in combination.

The polyalkylene glycol is water-soluble. Here, in the present invention, "water-soluble" means that 5 g or more, more preferably 10 g or more of the substance is dissolved in 100 g of water at 25°C. Since the polyalkylene glycol is water-soluble, the polyalkylene glycol can be more uniformly added when added in at least one step selected from the monomer aqueous solution preparation step, the polymerization step, and the hydrogel grinding step described above. As a result, a water-absorbent resin and a water-absorbing agent in which polyalkylene glycol is uniformly present can be obtained. As a result, when the nonionic polymer having the mass-average molecular weight and the amount described above and containing a polyalkylene glycol chain in the structure thereof is added to the water-absorbent resin after surface crosslinking, the effect of improving caking resistance performance through the addition of the nonionic polymer can be suitably enhanced.

The mass-average molecular weight of the polyalkylene glycol is 3000 or less. When the mass-average molecular weight of the polyalkylene glycol is 3000 or less, the effect of improving caking resistance performance through the addition of the nonionic polymer can be suitably enhanced when a nonionic polymer having the mass-average molecular weight and the addition amount containing a polyalkylene glycol chain in the structure is added to the water-absorbent resin after surface crosslinking. The mass-average molecular weight of the polyalkylene glycol is preferably 200 or more, more preferably 300 or more, still more preferably 400 or more. The mass-average molecular weight is more preferably 2500 or less, still more preferably 2400 or less, and may be 2300 or less. Here, the mass-average molecular weight of the polyalkylene glycol is a value measured by gel permeation chromatography.

The addition amount of the polyalkylene glycol is from 0.01 mass% to 0.25 mass% with respect to the total mass of the monomers contained in the monomer aqueous solution. Here, the total mass of monomers contained in the monomer aqueous solution means the total mass of monomers excluding the internal crosslinking agent. When the addition amount of the polyalkylene glycol is 0.01 mass% or more, the effect of improving caking resistance performance through the addition of the nonionic polymer can be enhanced when a nonionic polymer having the mass-average molecular weight and the amount containing a polyalkylene glycol chain in the structure thereof is added to a surface-crosslinked water-absorbent resin obtained through polymerization. When the addition amount of the polyalkylene glycol is more than 0.25 mass%, the caking resistance performance of the water-absorbent resin after surface crosslinking is deteriorated, that is, the moisture absorption blocking ratio (B. R.) is increased as compared with the case where the polyalkylene glycol is not added, which is not preferable. The addition amount of the polyalkylene glycol is more preferably 0.02 mass% or more, still more preferably 0.03 mass% or more, and more preferably 0.23 mass% or less, still more preferably 0.20 mass% or less, still more preferably 0.18 mass% or less.

As the polyalkylene glycol, a water-soluble polyalkylene glycol having the mass-average molecular weight and the amount described above may be added, and a plurality of types of polyalkylene glycols may be used within the range. When one or a plurality of types of polyalkylene glycols are used, polyalkylene glycols having a plurality of mass-average molecular weights may be used in combination for each polyalkylene glycol.

In the method for producing a water-absorbing agent according to the present invention, the water-soluble polyalkylene glycol having the mass-average molecular weight and the amount is added in at least one step selected from the monomer aqueous solution preparation step, the polymerization step, and the hydrogel grinding step.

Thus, the polyalkylene glycol may be added in any one of the monomer aqueous solution preparation step, the polymerization step, and the hydrogel grinding step, may be added in any two of the steps, or may be added in all of the steps. When the polyalkylene glycol is added in a plurality of steps, the polyalkylene glycol added in respective steps may be the same or different.

When the polyalkylene glycol is added in a plurality of steps, the addition amount of the polyalkylene glycol is determined such that the total amount of the polyalkylene glycol added in the plurality of steps falls within the range described above.

[2-5] Drying Step

The present step is a step of drying the particulate hydrogel obtained through the polymerization step or both the polymerization step and the hydrogel grinding step to obtain a dried polymer. Specifically, the drying step is a step of drying the particulate hydrogel, or both the granulated gel and the particulate hydrogel in a case where the granulated gel is added, to a desired solid content to obtain a dried polymer. The solid content, that is, the value obtained by subtracting the water content from 100 mass% of the gel is preferably 80 mass% or more, more preferably 85 mass% or more, still more preferably 90 mass% or more, particularly preferably 92 mass% or more, and preferably 99 mass% or less, still more preferably 98 mass% or less, particularly preferably 97 mass% or less. By setting the solid content of the dried polymer within the range described above, pulverizing, classification, and surface crosslinking can be efficiently performed. In the present specification, "drying is completed" refers to a state in which the solid content has reached 80 mass%. In the present step, the dried polymer is in the form of a block, and the water content may differ between the upper and lower portions, the central portion, and the end portion of the block. In this case, the dried polymer is appropriately taken from various positions, and the water content is measured after crushing the dried polymer as necessary, and the average is calculated.

In the present specification, a dried polymer having a solid content lower than the predetermined solid content may be referred to as an undried product. The "object to be dried" or the "particulate hydrogel" in the drying step may include both a particulate hydrogel and a granulated gel. The drying step of the present invention is a more effective condition particularly when both the particulate hydrogel and the granulated gel are contained. In other steps, the hydrogel and the processed product thereof may similarly include the granulated gel and a processed product thereof.

Examples of the drying method in the drying step include heat drying, hot-air drying, reduced pressure drying, fluidized bed drying, infrared drying, microwave drying, drying through azeotropic dehydration with a hydrophobic organic solvent, high humidity drying using high-temperature water vapor, and stirring drying. Among these, stirring drying or hot-air drying is preferable from the viewpoint of drying efficiency. The stirring drying is preferably performed with a stirring dryer such as a paddle dryer or a rotary drum dryer. The hot-air drying is preferably performed with a ventilation band type dryer that performs hot-air drying on a ventilation belt. By using the ventilation band type dryer, efficient drying can be performed while preventing physical damage of an object to be dried such as a dried polymer or a particulate hydrogel during drying, generation of fine powder due to friction, and the like.

The drying temperature in the case of hot-air drying, that is, the temperature of hot air is preferably 120°C or more, more preferably 130°C or more, still more preferably 150°C or more, and preferably 250°C or less, more preferably 230°C or less, still more preferably 200°C or less in consideration of drying efficiency. The drying time is preferably from 10 minutes to 120 minutes, more preferably from 20 minutes to 90 minutes, still more preferably from 30 minutes to 60 minutes. By setting the drying temperature and the drying time in this ranges, the physical properties of the resulting water-absorbent resin and the water-absorbing agent can be set within desired ranges. Other drying conditions may be appropriately set according to the water content and total mass of the particulate hydrogel or granulated gel to be dried and the target solid content, and when band drying is performed, various conditions described in WO 2006/100300, WO 2011/025012, WO 2011/025013, and WO 2011/111657 are appropriately applied.

[2-6] Pulverizing Step and Classification Step

In the present invention, the pulverizing step is optional and is a step of pulverizing the dried polymer, and the classification step is optional and is a step of removing fine powder from the dried polymer that has been ground. Specifically, the pulverizing step is a step of pulverizing the dried polymer obtained through the drying step in the pulverizing step. The classification step is a step of adjusting the dried polymer or the dried polymer ground in the pulverizing step to a particle size in a desired range. A water-absorbent resin in an irregularly crushed shape can be obtained through a pulverizing step after drying.

Examples of the pulverizing apparatus used in the pulverizing step include high-speed rotary pulverizing apparatuses such as a roll mill, a hammer mill, a screw mill, and a pin mill; vibration mills; knuckle type pulverizing apparatuses; and cylindrical mixers. Among these, a roll mill is preferably selected from the viewpoint of pulverizing efficiency. A plurality of these pulverizing apparatuses can be used in combination.

Examples of the method for adjusting the particle size in the classification step include sieve classification and air flow classification using JIS standard sieves (JIS Z 8801-1 (2000)). Among these, the sieve classification is preferably selected from the viewpoint of classification efficiency. From the viewpoint of ease of pulverizing, classification may be additionally performed before the pulverizing step.

In one embodiment of the present invention, the water-absorbent resin preferably has a mass-average particle diameter (D50) of 300 μm or more and 600 μm or less. In the water-absorbent resin, the mass proportion of particles having a particle diameter of 850 μm or more is preferably 3 mass% or less. In the water-absorbent resin, the mass proportion of particles having a particle diameter of 300 μm or more and less than 850 μm is preferably 50 mass% or more. In the water-absorbent resin, the mass proportion of particles of less than 150 μm is preferably 5 mass% or less. The upper limit of the mass-average particle diameter (D50) is more preferably 500 μm or less, still more preferably 450 μm or less. The mass proportion of the particles having a particle diameter of 850 μm or more in the water-absorbent resin is more preferably 2 mass% or less, still more preferably 1 mass% or less. The mass proportion of the particles having a particle diameter of 300 μm or more and less than 850 μm in the water-absorbent resin is more preferably 55 mass% or more, still more preferably 60 mass% or more. The mass proportion of the particles having a particle diameter of less than 150 μm in the water-absorbent resin is more preferably 4 mass% or less, still more preferably 3 mass% or less, particularly preferably 2 mass% or less. In one embodiment of the present invention, the logarithmic standard deviation ($\sigma\zeta$) of the particle size distribution of the water-absorbent resin is preferably 0.20 or more, more preferably 0.25 or more, still more preferably 0.27 or more, and preferably 0.50 or less, more preferably 0.45 or less, still more preferably 0.43 or less, particularly preferably 0.40 or less, most preferably 0.35 or less. The logarithmic standard deviation ($\sigma\zeta$) of the particle size distribution indicates the narrowness of the particle size distribution, and there is an advantage that the smaller the value, the more uniform the particle diameter, and the less the segregation of the particles. In one embodiment of the present invention, as the particle size of the water-absorbent resin, preferably, the mass-average particle diameter (D50), the mass proportion of particles having a particle diameter of 850 $\mu$m or more, the mass proportion of particles having a particle diameter of 300 $\mu$m or more and less than 850 $\mu$m, and the mass proportion of particles having a particle diameter of less than 150 $\mu$m described above are satisfied, more preferably, the mass-average particle diameter (D50), the mass proportion of particles having a particle diameter of 850 $\mu$m or more, the mass proportion of particles having a particle diameter of 300 $\mu$m or more and less than 850 $\mu$m, the mass proportion of particles having a particle diameter of less than 150 $\mu$m, and the logarithmic standard deviation described above are satisfied, and these particle sizes can be appropriately combined within the above ranges.

The mass-average particle diameter (D50) and the logarithmic mean standard deviation ($\sigma\zeta$) are measured by the measurement method described in "(3) Mass-Average Particle Diameter (D50) and Logarithmic Standard Deviation ($\sigma\zeta$) of Particle Diameter Distribution" of US 7638570.

The particle size described above is also applied to the water-absorbent resin after the pulverizing step and the classification step, and the particulate water-absorbing agent composition produced by the production method. Thus, when surface crosslinking is performed, it is preferable to perform the surface crosslinking treatment in the surface crosslinking step so as to maintain the particle size in the above range adjusted with the water-absorbent resin before surface crosslinking, and it is more preferable to adjust the particle size by providing a particle size adjustment step after the surface crosslinking step. Thus, the water-absorbent resin after the surface crosslinking step, the water-absorbent resin subjected to the nonionic polymer addition step, the particulate water-absorbing agent composition, and the like, which are produced by the production method according to one embodiment of the present invention, also preferably satisfy the mass-average particle diameter (D50), the mass proportion of particles having a particle diameter of 850 $\mu$m or more, the mass proportion of particles having a particle diameter of 300 $\mu$m or more and less than 850 $\mu$m, and the mass proportion of particles having a particle diameter of less than 150 $\mu$m within the above ranges, and more preferably satisfy the mass-average particle diameter (D50), the mass proportion of particles having a particle diameter of 850 $\mu$m or more, the mass proportion of particles having a particle diameter of 300 $\mu$m or more and less than 850 $\mu$m, the proportion of particles having a particle diameter of less than 150 $\mu$m, and the logarithmic standard deviation ($\sigma\zeta$) of the particle size distribution within the above ranges. More preferably, the water-absorbent resin after the surface crosslinking step, the water-absorbent resin and the particulate water-absorbing agent composition to be subjected to the nonionic polymer addition step, and the like, which are produced by the production method according to one embodiment of the present invention, have a mass-average particle diameter (D50) of from 300 to 600 $\mu$m, a mass proportion of particles having a particle diameter of 850 $\mu$m or more of 3 mass% or less, a mass proportion of particles having a particle diameter of 300 $\mu$m or more and less than 850 $\mu$m of 50 mass% or more, a mass proportion of particles having a particle diameter of less than 150 $\mu$m of 5 mass% or less, and a logarithmic standard deviation ($\sigma\zeta$) of particle size distribution of from 0.20 to 0.50.

[2-7] Surface Crosslinking Step

The present step is a step of further providing a portion having a high crosslinking density on the surface layer of the water-absorbent resin before surface crosslinking obtained through the steps described above, and includes a mixing step, a heat treatment step, and a cooling step. In the surface crosslinking step, radical crosslinking, surface polymerization, a crosslinking reaction with a surface crosslinking agent, and the like occur on the surface of the water-absorbent resin before surface crosslinking, and thus a surface-crosslinked water-absorbent resin is obtained. The water-absorbent resin before surface crosslinking obtained through the steps described above is the dried polymer, a water-absorbent resin obtained by pulverizing and/or classifying the dried polymer, and the like.

[2-7-1] Mixing Step

The present step is a step of obtaining a mixture by mixing a solution containing a surface crosslinking agent (hereinafter, referred to as "surface crosslinking agent solution") with the water-absorbent resin before surface crosslinking in a mixing apparatus.

Surface Crosslinking Agent

Examples of the surface crosslinking agent used in the production method according to one embodiment of the present invention include the surface crosslinking agent described in US 7183456. Among these surface crosslinking agents, at least one surface crosslinking agent is selected in consideration of reactivity and the like. In addition, from the viewpoint of the handleability of the surface crosslinking agent, the water-absorbing performance of the water-absorbent resin and the water-absorbing agent, and the like, an organic compound that is a surface crosslinking agent having two or more functional groups reactive with a carboxyl group and in which a covalent bond is formed is preferably selected.

Specific examples of the surface crosslinking agent include polyhydric alcohol compounds such as ethylene glycol, diethylene glycol, triethylene glycol, tetraethylene glycol, polyethylene glycol, propylene glycol, dipropylene glycol, polypropylene glycol, 1,3-propanediol, 1,2-butanediol, 1,3-butanediol, 1,4-butanediol, 2,3-butanediol, 1,2-pentanediol, 1,3-pentanediol, 1,4-pentanediol, 1,5-pentanediol, 2,3-pentanediol, 2,4-pentanediol, 1,2-hexanediol, 1,3-hexanediol, 1,4-hexanediol, 1,5-hexanediol, 1,6-hexanediol, 2,3-hexanediol, 2,4-hexanediol, glycerin, polyglycerin, diethanolamine, and triethanolamine; polyvalent amine compounds such as ethylenediamine, diethylenetriamine, triethylenetetramine, tetraethylenepentamine, pentaethylenehexamine, polyallylamine, and polyethyleneimine; haloepoxy compounds and condensates of polyvalent amine compounds and haloepoxy compounds; oxazoline compounds such as 1,2-ethylenebisoxazoline; oxazolidinone compounds; alkylene carbonate compounds such as 1,3-dioxolan-2-one(ethylene carbonate), 4-methyl-1,3-dioxolan-2-one, 4,5-dimethyl-1,3-dioxolan-2-one, 4,4-dimethyl-1,3-dioxolan-2-one, 4-ethyl-1,3-dioxolan-2-one, 4-hydroxymethyl-1,3-dioxolan-2-one, 1,3-dioxan-2-one, 4-methyl-1,3-dioxan-2-one, 4,6-dimethyl-1,3-dioxan-2-one, and 1,3-dioxopan-2-one; polyvalent glycidyl compounds such as ethylene glycol diglycidyl ether, polyethylene diglycidyl ether, propylene glycol diglycidyl ether, polypropylene glycol diglycidyl ether, glycerol polyglycidyl ether, diglycerol polyglycidyl ether, polyglycerol polyglycidyl ether, and glycidol; oxetane compounds; vinyl ether compounds; and cyclic urea compounds. One of these surface crosslinking agents may be used alone, or two or more thereof may be used in combination.

The amount of the surface crosslinking agent used, or the total amount of the surface crosslinking agents when a plurality of types thereof are used, is preferably from 0.01 parts by mass to 10.00 parts by mass, more preferably from 0.01 parts by mass to 5.00 parts by mass, still more preferably from 0.01 parts by mass to 2.00 parts by mass, with respect to 100 parts by mass of the water-absorbent resin before surface crosslinking. By setting the amount of the surface crosslinking agent used in this range, an optimum crosslinked structure can be formed on the surface layer of the crosslinked polymer, and a water-absorbent resin and a water-absorbing agent having high physical properties can be obtained.

The surface crosslinking agent is preferably added to the water-absorbent resin before surface crosslinking as an aqueous solution. In this case, the amount of use of water is preferably from 0.1 parts by mass to 20.0 parts by mass, more preferably from 0.3 parts by mass to 15.0 parts by mass, still more preferably from 0.5 parts by mass to 10 parts by mass, with respect to 100 parts by mass of the water-absorbent resin before surface crosslinking. By setting the amount of water used in this range, the handleability of the surface crosslinking agent solution is improved, and the surface crosslinking agent can be uniformly mixed with the water-absorbent resin before surface crosslinking.

The surface crosslinking agent solution can also be obtained by using a hydrophilic organic solvent in combination with the water as necessary. In this case, the amount of use of the hydrophilic organic solvent is preferably 5 parts by mass or less, more preferably 3 parts by mass or less, still more preferably 1 part by mass or less, with respect to 100 parts by mass of the water-absorbent resin before surface crosslinking. Specific examples of the hydrophilic organic solvent include lower alcohols such as methyl alcohol; ketones such as acetone; ethers such as dioxane; amides such as N,N-dimethylformamide; sulfoxides such as dimethyl sulfoxide; and polyhydric alcohols such as ethylene glycol. However, the use of these hydrophilic organic solvents is preferably limited to an amount of use as small as possible.

Various additives can be added to the surface crosslinking agent solution within a range of 5 parts by mass or less, and/or can be separately added in the mixing step.

Mixing Method and Mixing Conditions

For mixing the water-absorbent resin and the surface crosslinking agent solution, a surface crosslinking agent solution is prepared in advance, and the solution is preferably sprayed or dropped onto the crosslinked polymer, and more preferably sprayed and mixed.

The mixing apparatus that performs the mixing preferably has a torque necessary for uniformly and reliably mixing the water-absorbent resin and the surface crosslinking agent. The mixing apparatus is preferably a high-speed stirring type mixer, and more preferably a high-speed stirring type continuous mixer. The rotation speed of the high-speed stirring mixer is preferably 100 rpm or more, more preferably 300 rpm or more, and preferably 10000 rpm or less, more preferably 2000 rpm or less.

The temperature of the water-absorbent resin supplied to the present step is preferably from 35°C to 80°C, more preferably from 35°C to 70°C, still more preferably from 35°C to 60°C, from the viewpoint of the mixability with the surface crosslinking agent solution and the cohesiveness of the humidified mixture. The mixing time is preferably 1 second or more, more preferably 5 seconds or more, and preferably 1 hour or less, more preferably 10 minutes or less.

[2-7-2] Heat Treatment Step

The present step is a step of applying heat to the mixture obtained in the mixing step to cause a crosslinking reaction on the surface of the water-absorbent resin. In the heat treatment of the water-absorbent resin, the water-absorbent resin may be heated in a stationary state or may be heated in a flowing state using power such as stirring, but it is preferable to heat the water-absorbent resin under stirring in that the entire humidified mixture can be uniformly heated. From the above viewpoint, examples of the heat treatment apparatus that performs the heat treatment include a paddle dryer, a multi-fin processor, and a tower dryer.

The so-called control temperature of the heat treatment apparatus is not necessarily constant from the beginning to the end of the step as long as the water-absorbent resin can be heated to the temperature described later. However, the temperature is preferably from 50°C to 300°C to prevent partial overheating and the like. When damage resistance is emphasized as a physical property of the resulting water-absorbent resin, the temperature is more preferably 250°C or less, still more preferably from 70°C to 230°C, particularly preferably from 90°C to 220°C. On the other hand, when water-absorbing performance is emphasized, the temperature is more preferably from 120°C to 280°C, still more preferably from 150°C to 250°C, particularly preferably from 170°C to 230°C.

The heating time is preferably from 1 minute to 180 minutes, more preferably from 5 minutes to 120 minutes, still more preferably from 10 minutes to 120 minutes, particularly preferably from 15 to 60 minutes. When the heat treatment time is shorter than 1 minute, the surface crosslinking treatment becomes insufficient, and the absorption against pressure (AAP) decreases. On the other hand, when the heat treatment time is long, coloring may occur, and/or the centrifuge retention capacity (CRC) may be excessively lowered.

[2-7-3] Cooling Step

The present step is an optional step provided as necessary after the heat treatment step and/or after the drying step. The present step is a step of forcibly cooling the high-temperature water-absorbent resin that has been subjected to the heat treatment step to a predetermined temperature to rapidly terminate the surface crosslinking reaction.

The water-absorbent resin may be cooled in a stationary state or may be cooled in a flowing state using power such as stirring, but it is preferable to cool the water-absorbent resin under stirring from the viewpoint of uniformly cooling the entire water-absorbent resin. From the above viewpoint, examples of the cooling apparatus that performs the cooling include a paddle dryer, a multi-fin processor, and a tower dryer. These cooling apparatuses may have the same specifications as those of the heat treatment apparatus used in the heat treatment step. This is because the heat treatment apparatus can be used as a cooling apparatus by changing the heat medium of the heat treatment apparatus to a refrigerant.

The cooling temperature in the present step may be appropriately set according to the heating temperature in the heat treatment step, the water-absorbing performance of the water-absorbent resin, and the like, and is preferably from 40°C to 100°C, more preferably from 50°C to 90°C, still more preferably from 50°C to 70°C or less.

[2-8] Nonionic Polymer Addition Step

In the method for producing a particulate water-absorbing agent composition according to one embodiment of the present invention, after the surface crosslinking step, a nonionic polymer containing a polyalkylene glycol chain in the structure and having a mass-average molecular weight of from 300 to 15000 is added in an amount of from 0.02 mass% to 0.40 mass% with respect to the surface-crosslinked water-absorbent resin. That is, the method for producing a particulate water-absorbing agent composition according to one embodiment of the present invention includes a nonionic polymer addition step. The present step includes an addition step, a mixing step, and a curing step.

[2-8-1] Nonionic Polymer

The nonionic polymer preferably contains in the structure, a polyalkylene glycol chain represented by General Formula (2) described below.

$$-(OR)_m- \qquad (2)$$

In General Formula (2), R is an alkylene group having from 2 to 4 carbon atoms, and may be linear or branched. The average value of m is from 4 to 350, more preferably from 5 to 250, still more preferably from 6 to 100.

In General Formula (2), the oxyalkylene groups (-OR-) in one molecule may be the same or may contain two or more oxyalkylene groups.

When the nonionic polymer contains a polyalkylene glycol chain in the structure, it is possible to improve caking resistance performance without deteriorating water-absorbing performance under pressure of the resulting water-absorbing agent when the nonionic polymer is added to the surface-crosslinked water-absorbent resin produced by adding a water-soluble polyalkylene glycol having the mass-average molecular weight and the amount in at least one step selected from the monomer aqueous solution preparation step, the polymerization step, and the hydrogel grinding step.

Examples of the nonionic polymer containing a polyalkylene glycol chain in the structure include polyalkylene glycols such as polyethylene glycol, polypropylene glycol, a polyethylene glycol-polypropylene glycol copolymer, and a polyethylene glycol-polypropylene glycol-polybutylene glycol copolymer; polyoxyethylene alkyl ethers such as polyoxyethylene lauryl ether, polyoxyethylene cetyl ether, polyoxyethylene stearyl ether, polyoxyethylene oleyl ether, and polyoxyethylene higher alcohol ether, polyoxyethylene alkylaryl ethers such as polyoxyethylene nonylphenyl ether; polyoxyethylene sorbitan fatty acid esters such as polyoxyethylene sorbitan monolaurate, polyoxyethylene sorbitan monopalmitate, polyoxyethylene sorbitan monostearate, polyoxyethylene sorbitan tristearate, polyoxyethylene sorbitan monooleate, and polyoxyethylene sorbitan trioleate; polyoxyethylene sorbitol fatty acid esters such as polyoxyethylene sorbitol tetraoleate; polyoxyethylene fatty acid esters such as polyethylene glycol monolaurate; polyethylene glycol monostearate, polyethylene glycol distearate, and polyethylene glycol monooleate; polyoxyethylene alkylamine; and polyoxyethylene-hydrogenated castor oil. One of these nonionic polymers may be used alone, or two or more thereof may be used in combination.

The nonionic polymer has a mass-average molecular weight of from 300 to 15000. When the mass-average molecular weight of the nonionic polymer is within the range described above, the caking resistance performance of the resulting water-absorbing agent obtained when the nonionic polymer is added to the surface-crosslinked water-absorbent resin produced by adding a water-soluble polyalkylene glycol having the mass-average molecular weight and the amount described above in at least one step selected from the monomer aqueous solution preparation step, the polymerization step, and the hydrogel grinding step is greatly improved, which is preferable. The mass-average molecular weight of the nonionic polymer is more preferably 350 or more, still more preferably 400 or more, and also preferably 500 or more. The mass-average molecular weight is more preferably 12000 or less, still more preferably 10000 or less, and may be 5000 or less. The mass-average molecular weight of the nonionic polymer is a value measured by gel permeation chromatography.

The HLB of the nonionic polymer is preferably 5 or more, more preferably 10 or more. When the HLB of the nonionic polymer is within the above range, the caking resistance performance can be improved without deteriorating the water-absorbing performance under pressure of the resulting water-absorbing agent when the nonionic polymer is added to a surface-crosslinked water-absorbent resin produced by adding a water-soluble polyalkylene glycol having the mass-average molecular weight and the amount described above in at least one step selected from the monomer aqueous solution preparation step, the polymerization step, and the hydrogel grinding step.

Here, the HLB is a value calculated by the Griffin method. The HLB of a nonionic polymer having an unknown HLB can be determined by the following method. A certain type of oil is emulsified with a nonionic polymer whose HLB is to be determined (a surfactant having a known HLB is added if necessary), the same oil is separately emulsified with surfactants having known HLB values (surfactants having different HLB of values are used), and the HLB of the surfactant that produces the same emulsified state is defined as the HLB of the nonionic polymer.

The addition amount of the nonionic polymer is from 0.02 mass% to 0.40 mass% with respect to the surface-crosslinked water-absorbent resin. When the addition amount of the nonionic polymer is within the range described above, the caking resistance performance of the resulting water-absorbing agent obtained when the nonionic polymer is added to the surface-crosslinked water-absorbent resin produced by adding a water-soluble polyalkylene glycol having the mass-average molecular weight and the amount described above in at least one step selected from the monomer aqueous solution preparation step, the polymerization step, and the hydrogel grinding step is greatly improved, which is preferable. The addition amount of the nonionic polymer is more preferably 0.04 mass% or more, still more preferably 0.06 mass% or more, still more preferably 0.08 mass% or more, still more preferably 0.15 mass% or more, with respect to the surface-crosslinked water-absorbent resin. The addition amount is more preferably 0.35 mass% or less.

As the nonionic polymer, a nonionic polymer having the mass-average molecular weight and the amount may be added, and a plurality of types of nonionic polymers may be used within the range. When one or a plurality of types of nonionic polymers are used, nonionic polymers having a plurality of mass-average molecular weights may be used in combination.

[2-8-2] Addition Step and Mixing Step

In the method for producing a water-absorbing agent according to the present invention, after the surface crosslinking step, the nonionic polymer having the mass-average molecular weight and the amount containing a polyalkylene glycol chain in the structure may be added to the surface-crosslinked water-absorbent resin.

The method for adding the nonionic polymer to the surface-crosslinked water-absorbent resin is not particularly limited either. The nonionic polymer may be added as it is, may be added as a solution diluted with an organic solvent, or may be added as an aqueous solution, and is more preferably added as an aqueous solution. In this case, the aqueous solution concentration is preferably from 1 mass% to 70 mass%, more preferably from 5 mass% to 60 mass%, still more preferably from 10 mass% to 50 mass%. By setting the aqueous solution concentration in this range, the handleability of the liquid containing the nonionic polymer is improved, and the nonionic polymer can be uniformly mixed with the water-absorbent resin after surface crosslinking.

The method for mixing the water-absorbent resin after surface crosslinking with the nonionic polymer or the aqueous solution thereof is not particularly limited either, and a method in which the nonionic polymer or the aqueous solution thereof is dropped onto the water-absorbent resin after surface crosslinking under stirring using a straight pipe, a method in which the nonionic polymer or the aqueous solution thereof is sprayed onto the water-absorbent resin using a spray nozzle, and the like can be used. From the viewpoint of uniform mixing, the average droplet diameter of the nonionic polymer or the aqueous solution thereof at the time of dropping or spraying is preferably 2.5 mm or less, more preferably 1.5 mm or less, still more preferably 1.0 mm or less, particularly preferably 0.5 mm or less. On the other hand, because the cost required for making the droplets fine becomes too expensive with respect to the obtained effect, the average droplet diameter is preferably 10 $\mu$m or more, more preferably 30 $\mu$m or more, still more preferably 50 $\mu$m or more.

The mixing apparatus that performs mixing preferably has a torque necessary for uniformly and reliably mixing the water-absorbent resin after surface crosslinking and the nonionic polymer. Specific examples of the mixing apparatus include a cylindrical mixer, a double-wall conical mixer, a V-shaped mixer, a ribbon-shaped mixer, a screw-type mixer, a rotary disk mixer, a double-arm kneader, an internal mixer, a pulverizing kneader, a rotary mixer, a screw-type extruder, a fluidized bed-type mixer, and a flow-type mixer. An apparatus capable of mixing by stirring is more preferable. Examples thereof include a high-speed stirring type mixing apparatus and a vertical rotary disk type mixing apparatus. Among these, a high-speed stirring type continuous mixing apparatus is preferable, and a horizontal high-speed stirring type continuous mixing apparatus and a vertical high-speed stirring type continuous mixing apparatus are more preferable. Specific examples of the high-speed stirring type mixing apparatus include a Schugi mixer (available from Hosokawa Micron Corporation), a turbulizer (available from Hosokawa Micron Corporation), a Lodige mixer (available from Lodige Industries), and a flow jet mixer (available from FUNKEN POWTECHS, INC.). In the case of using a stirring type mixing apparatus, the rotation speed is preferably 5 rpm or more, more preferably 10 rpm or more, and preferably 10000 rpm or less, more preferably 2000 rpm or less.

The temperature of the nonionic polymer or the aqueous solution thereof to be mixed is preferably from 10°C to 70°C, more preferably from 20°C to 60°C from the viewpoint of mixability and cohesiveness of the humidified mixture. The temperature range is a temperature measured before being affected by the temperature of the water-absorbent resin and/or the temperature of an apparatus in which the water-absorbent resin is retained when the nonionic polymer or the aqueous solution thereof is added to the water-absorbent resin.

The temperature of the water-absorbent resin subjected to mixing after surface crosslinking is preferably 180°C or less, more preferably 160°C or less, still more preferably 150°C or less, and preferably 40°C or more, more preferably 50°C or more, still more preferably 60°C or more, from the viewpoint of the time required for cooling after the surface crosslinking step, the mixability, and the cohesiveness of the humidified mixture.

[2-8-3] Curing Step

The obtained mixture of the water-absorbent resin after surface crosslinking and the nonionic polymer or an aqueous solution thereof is preferably subjected to a curing treatment. The term "curing" refers to an operation of removing the wettability of the surface of the water-absorbent resin and powderizing the water-absorbent resin. The "curing treatment" is a treatment for curing an object by controlling the temperature of the object to a predetermined curing temperature and holding the temperature state for a predetermined curing time.

In one embodiment of the present invention, it is preferable that a heating medium such as hot air is used for the curing treatment. The curing temperature, for example, the heat medium temperature or the material temperature is preferably from 40°C to 150°C, more preferably from 50°C to 140°C. The curing time in this temperature range is preferably 1 minute or more, more preferably 5 minutes or more, and preferably 2 hours or less, more preferably 1.5 hours or less. When the curing temperature is too low and/or the curing time is too short, the resulting particulate water-absorbing agent composition is in a wet state, and thus the adhesiveness is strong, and handling as a powder may be difficult. When the curing temperature is too high and/or when the curing time is too long, it is energetically uneconomical.

The addition and mixing of the nonionic polymer or the aqueous solution thereof and the subsequent curing treatment may be performed with the same apparatus or may be performed with different apparatuses. The series of treatments described above may be performed during the cooling step or after the cooling step. The mixing apparatus is exemplified as the apparatus to be used, and for example, a heating medium such as a gas or conductive heating may be adjusted so that the temperature in the apparatus becomes the above temperature. In the case of curing, stirring may be performed as long as the curing temperature and the curing time can be controlled within predetermined ranges, and the curing treatment may be performed in a stationary state, that is, stirring might not be performed. When the curing treatment is performed in a stationary state, the water-absorbent resin may be stacked so as to have a thickness of preferably 1 cm or more, more preferably 5 cm or more, still more preferably 10 cm or more, and preferably 100 cm or less, more preferably 80 cm or less, still more preferably 70 cm or less, and then cured. The water-absorbing agent composition after curing can be ground or classified as necessary to obtain a particulate water-absorbing agent composition having a desired particle size.

[3] Particulate Water-Absorbing Agent Composition

One aspect of the present invention also includes a particulate water-absorbing agent composition produced by the method for producing a particulate water-absorbing agent composition according to one embodiment of the present invention. That is, a particulate water-absorbing agent composition according to one embodiment of the present invention is a particulate water-absorbing agent composition produced by a method for producing a particulate water-absorbing agent composition containing a poly(meth)acrylic acid (salt)-based water-absorbent resin, the method including: a monomer aqueous solution preparation step of preparing a (meth)acrylic acid (salt)-based monomer aqueous solution; a polymerization step of polymerizing the (meth)acrylic acid (salt)-based monomer aqueous solution; as an optional step, a hydrogel grinding step of subjecting a resulting crosslinked hydrogel polymer to gel grinding during polymerization or after polymerization; a drying step of drying a particulate hydrogel; as optional steps, a pulverizing step and a classification step of pulverizing and classifying a dried polymer; and a surface crosslinking step of performing surface crosslinking on a water-absorbent resin before surface crosslinking, in which at least one step selected from the monomer aqueous solution preparation step, the polymerization step, and the optional hydrogel grinding step includes adding a water-soluble polyalkylene glycol having a mass-average molecular weight of 3000 or less in an amount of from 0.01 mass% to 0.25 mass% with respect to a total mass of monomers contained in the monomer aqueous solution, and after the surface crosslinking step, a nonionic polymer having a polyalkylene glycol chain in a structure thereof and having a mass-average molecular weight of from 300 to 15000 is added in an amount of from 0.02 mass% to 0.40 mass% with respect to the water-absorbent resin that has been surface-crosslinked.

A particulate water-absorbing agent composition according to one embodiment of the present invention may be a particulate water-absorbing agent composition including a poly(meth)acrylic acid (salt)-based water-absorbent resin as a main component and a nonionic polymer having a polyalkylene glycol chain in a structure, the particulate water-absorbing agent composition having a mass proportion of particles having a particle diameter of 300 $\mu$m or more and less than 850 $\mu$m of 50 mass% or more,

the particulate water-absorbing agent composition satisfying all of (1) to (4) shown below when:

> (a) the nonionic polymer contained in the particulate water-absorbing agent composition is defined as A1, and a content of the nonionic polymer is defined as C1;
> (b) the particulate water-absorbing agent composition is subjected to a predetermined impact test;
> (c) the particulate water-absorbing agent composition that has been subjected to the impact test is sieved into a particle group a having a particle diameter of 300 $\mu$m or more and a particle group b having a particle diameter of less than 300 $\mu$m with a JIS standard sieve; and
> (d) the nonionic polymer present in the particle group a is defined as A2, and a content of the nonionic polymer is defined as C2:
>
>> (1) A1 is a water-soluble polyalkylene glycol having a mass-average molecular weight of 3000 or less and a nonionic polymer having a polyalkylene glycol chain in the structure and having a mass-average molecular weight from 300 to 15000;
>> (2) A2 is a water-soluble polyalkylene glycol having a mass-average molecular weight of 3000 or less;
>> (3) C2 is 0.005 mass% or more and 0.15 mass% or less; and
>> (4) C1 - C2 is 0.02 mass% or more and 0.40 mass% or less.

Here, the water-soluble polyalkylene glycol is a type of nonionic polymer having a polyalkylene glycol chain in the structure. Thus, the nonionic polymer contained in the particulate water-absorbing agent composition that satisfies A1, that is, all of (1) to (4), is specifically composed of polymers shown in the following (i) and (ii).

> (i) A water-soluble polyalkylene glycol having a mass-average molecular weight of 3000 or less added in at least one step selected from the monomer aqueous solution preparation step, the polymerization step, and the optional hydrogel grinding step in the production method.
> (ii) A nonionic polymer having a mass-average molecular weight from 300 to 15000 having, in the structure, a polyalkylene glycol chain added after the surface crosslinking step in the production method.

The predetermined impact test is a test performed by the following operations (i) to (iii), and can be performed, for example, by the method described in (Pretreatment 1: Impact Test) of Examples.

> (i) In a glass container having a diameter of 6 cm and a height of 11 cm, 30 g of the particulate water-absorbing agent composition and 10 g of glass beads having a diameter of 6 mm are placed.

(ii) The glass container obtained in (i) is shaken using a paint shaker described in JP H9-235378 A at a shaking speed of 800 times/min for a shaking time adjusted to satisfy Formula (7) described below to grind the particulate water-absorbing agent composition.

$$0.2 < (\text{mass of particle group a})/(\text{total mass of particle group a and particle group b}) < 0.3 \qquad \text{Formula (7)}$$

(iii) The glass beads are removed from the mixture of the ground particulate water-absorbing agent composition and the glass beads obtained in (ii). The method for the removal is not particularly limited, and examples thereof include sieving by passing the ground particulate water-absorbing agent composition through a sieve having a mesh size that does not allow the glass beads to pass through, for example, a mesh size of 2 mm.

In the particulate water-absorbing agent composition satisfying all of (1) to (4), it is essential that both the particle group a and the particle group b are obtained by the sieving described in (c). Thus, the particle size and particle size distribution of the particulate water-absorbing agent composition satisfying all of (1) to (4) are preferably in the same range as the preferable ranges of the particle size and particle size distribution of the water-absorbent resin after the surface crosslinking step and the water-absorbent resin to be subjected to the nonionic polymer addition step. Specifically, the particle size and the particle size distribution are represented by, for example, the mass-average particle diameter (D50), the mass proportion of particles having a particle diameter of 850 $\mu$m or more, the mass proportion of particles having a particle diameter of 300 $\mu$m or more and less than 850 $\mu$m, the mass proportion of particles having a particle diameter of less than 150 $\mu$m, and the logarithmic standard deviation ($\sigma\zeta$) of the particle size distribution.

[3-1] Water-Absorbent Resin

The particulate water-absorbing agent composition according to one embodiment of the present invention is a particulate water-absorbing agent composition containing a poly(meth)acrylic acid (salt)-based water-absorbent resin, and more preferably a particulate water-absorbing agent composition containing a poly(meth)acrylic acid (salt)-based water-absorbent resin as a main component (preferably, 60 mass% or more and less than 100 mass%, 70 mass% or more and less than 100 mass%, 80 mass% or more and less than 100 mass%, or 90 mass% or more and less than 100 mass%). The water-absorbent resin may be a "water-absorbent resin after surface crosslinking". The shape of the water-absorbent resin is usually a particulate shape. The particulate water-absorbent resin may be, for example, in an irregularly crushed shape (irregular shape), a spherical shape, a fibrous shape, a rod shape, a substantially spherical shape, or a flat shape. Among these, it is preferable that at least a part has an irregularly crushed shape. In consideration of use in an absorbent article, the water-absorbent resin is more preferably amorphous among the shapes of the particles described above from the viewpoint of liquid diffusibility, difficulty in falling off from pulp, and the like.

AAP of Water-Absorbent Resin After Surface Crosslinking

In one embodiment of the present invention, the absorption against pressure (AAP) of the water-absorbent resin after surface crosslinking under pressure of 0.7 psi is preferably 20.0 g/g or more, more preferably 21.0 g/g or more, still more preferably 24.0 g/g or more, particularly preferably 25.0 g/g or more, most preferably 25.2 g/g or more. The upper limit value is not particularly limited, and is preferably 30.0 g/g or less from the viewpoint of balance with other physical properties.

When AAP is 20.0 g/g or more, the return amount of the liquid when a pressure is applied to the absorber does not become too large, and thus the resin is suitable as an absorber of an absorbent article such as a disposable diaper. AAP can be controlled with an internal crosslinking agent, a particle size, and/or a surface crosslinking agent.

In the present specification, the absorption against pressure (AAP) under pressure of 0.7 psi is a value determined by the method described in the section of Examples described later.

FHA of Water-Absorbent Resin after Surface Crosslinking

In one embodiment of the present invention, the fixed height absorption (FHA) at a height of 20 cm of the water-absorbent resin after surface crosslinking is preferably 20.0 g/g or more, more preferably 22.0 g/g or more, still more preferably 25.0 g/g or more, particularly preferably 25.3 g/g or more. The upper limit value is not particularly limited, and is preferably 30.0 g/g or less from the viewpoint of balance with other physical properties.

When FHA is 20.0 g/g or more, the return amount of the liquid when a pressure is applied to the absorber does not become excessively large, and thus the resin is suitable as an absorber of an absorbent article such as a disposable diaper.

FHA can be controlled with an internal crosslinking agent, a particle size, and/or a surface crosslinking agent.

In the present specification, FHA is a value determined by the method described in the section of Examples described later.

B. R. of Water-Absorbent Resin After Surface Crosslinking

In one embodiment of the present invention, the moisture absorption blocking ratio <1> (B. R. <1>) of the water-absorbent resin after surface crosslinking is preferably 99 mass% or less, and the lower limit value thereof is not particularly limited. B. R. <1> is preferably low from the viewpoint that the handleability of the water-absorbing agent or the water-absorbent resin is poor in a humid environment and the problem of occurrence of aggregation and clogging in a transfer pipe of a production plant due to caking and inability to uniformly mix with hydrophilic fibers hardly occurs at the time of producing an absorber in an absorbent article. However, it is possible to suitably lower B. R. <1> by adding a nonionic polymer containing a polyalkylene glycol chain in the structure and having a mass-average molecular weight from 300 to 15000 to the surface-crosslinked water-absorbent resin after the surface crosslinking step in an amount of from 0.02 mass% to 0.40 mass% with respect to the surface-crosslinked water-absorbent resin, and thus B. R. <1> may be 99 mass% or less at the stage of the water-absorbent resin after surface crosslinking.

B. R. <1> in the present specification is a value measured by the method described in Examples.

CRC of Water-Absorbent Resin After Surface Crosslinking

In one embodiment of the present invention, the centrifuge retention capacity (CRC) of the water-absorbent resin after surface crosslinking is preferably 20.0 g/g or more, more preferably 25.0 g/g or more, still more preferably 28.0 g/g or more, particularly preferably 28.5 g/g or more. The upper limit of CRC is preferably as high as possible, but is preferably 45.0 g/g or less, more preferably 40.0 g/g or less, still more preferably 35.0 g/g or less, particularly preferably 30.0 g/g or less in view of balance with other physical properties.

In the present specification, CRC is a value determined by the method described in the section of Examples described later.

SFC of Water-Absorbent Resin After Surface Crosslinking

In one embodiment of the present invention, the physiological saline flow conductivity (SFC) of the water-absorbent resin after surface crosslinking is preferably $1 \times 10^{-7}$ cm$^3 \cdot$ sec/g or more, more preferably $10 \times 10^{-7}$ cm$^3 \cdot$sec/g or more, still more preferably $15 \times 10^{-7}$ cm$^3 \cdot$sec/g or more, particularly preferably $20 \times 10^{-7}$ cm$^3 \cdot$sec/g or more. The upper limit value of SFC is not particularly limited, and a higher value is more preferable.

In the present specification, SFC is a value determined by the method described in the section of Examples described later.

FSR of Water-Absorbent Resin after Surface Crosslinking

In one embodiment of the present invention, the free swell rate (FSR) of the water-absorbent resin after surface crosslinking is preferably 0.20 g/(g·s) or more, more preferably 0.25 g/(g·s) or more, more preferably 0.30 g/(g·s) or more, and still more preferably 0.35 g/(g·s) or more.

In the present specification, FSR is a value determined by the method described in the section of Examples described later.

[3-2] Physical Properties of Particulate Water-Absorbing Agent Composition AAP

In one embodiment of the present invention, the absorption against pressure (AAP) of the particulate water-absorbing agent composition under pressure of 0.7 psi is preferably 20.0 g/g or more, more preferably 21.0 g/g or more, still more preferably 24.0 g/g or more, particularly preferably 25.0 g/g or more, most preferably 25.2 g/g or more. The upper limit value is not particularly limited, and is preferably 30.0 g/g or less from the viewpoint of balance with other physical properties.

When AAP is 20.0 g/g or more, the return amount of the liquid when a pressure is applied to the absorber does not become too large, and thus the resin is suitable as an absorber of an absorbent article such as a disposable diaper. AAP can be controlled with an internal crosslinking agent, a particle size, a surface crosslinking agent, and/or an additive and the like added after the surface crosslinking step.

FHA

In one embodiment of the present invention, the fixed height absorption (FHA) at a height of 20 cm of the particulate water-absorbing agent composition is preferably 20.0 g/g or more, more preferably 22.0 g/g or more, still more preferably 25.0 g/g or more, particularly preferably 25.3 g/g or more. The upper limit value is not particularly limited, and is preferably 30.0 g/g or less from the viewpoint of balance with other physical properties.

When FHA is 20.0 g/g or more, the water-absorbing performance when a pressure is applied to the absorber is increased, and thus the resin is suitable as an absorber of an absorbent article such as a disposable diaper. FHA can be controlled with an internal crosslinking agent, a particle size, a surface crosslinking agent, and/or an additive added after the surface crosslinking step.

B. R.

In one embodiment of the present invention, the moisture absorption blocking ratio <1> (B. R. <1>) of the particulate water-absorbing agent composition is preferably 90 mass% or less, more preferably 85 mass% or less, still more preferably 80 mass% or less, particularly preferably 75 mass% or less. When B. R. <1> exceeds 90 mass%, the handleability of the particulate water-absorbing agent composition is poor in a humid environment, and there is a possibility that the problem of occurrence of aggregation and clogging in a transfer pipe of a production plant due to caking or inability to uniformly mix with hydrophilic fibers may occur at the time of producing an absorber in an absorbent article.

ΔB. R.

In one embodiment of the present invention, a value (ΔB. R.) obtained by subtracting the B. R. of the particulate water-absorbing agent composition obtained by adding the nonionic polymer from the B. R. of the water-absorbent resin after surface crosslinking is preferably 20 mass% or more, more preferably 25 mass% or more, still more preferably 30 mass% or more, particularly preferably 35 mass% or more. When ΔB. R. is 20 mass% or more, the effect of improving caking resistance performance through addition of the nonionic polymer is large.

In the present specification, ΔB. R. is a value determined by the method described in the section of Examples described later.

CRC

In one embodiment of the present invention, the centrifuge retention capacity (CRC) of the particulate water-absorbing agent composition is preferably 20.0 g/g or more, more preferably 25.0 g/g or more, still more preferably 28.0 g/g or more, particularly preferably 28.5 g/g or more. The upper limit of CRC is preferably as high as possible, but is preferably 45.0 g/g or less, more preferably 40.0 g/g or less, still more preferably 35.0 g/g or less, particularly preferably 30.0 g/g or less in view of balance with other physical properties.

SFC

In one embodiment of the present invention, the physiological saline flow conductivity (SFC) of the particulate water-absorbing agent composition is preferably $1 \times 10^{-7}$ cm$^3$ ·sec/g or more, more preferably $10 \times 10^{-7}$ cm$^3$·sec/g or more, still more preferably $15 \times 10^{-7}$ cm$^3$·sec/g or more, particularly preferably $20 \times 10^{-7}$ cm$^3$·sec/g or more. The upper limit value of SFC is not particularly limited, and a higher value is more preferable.

FSR

In one embodiment of the present invention, the free swell rate (FSR) of the particulate water-absorbing agent composition is preferably 0.20 g/(g·s) or more, more preferably 0.25 g/(g·s) or more, more preferably 0.30 g/(g·s) or more, and still more preferably 0.35 g/(g·s) or more.

Surface Tension

In one embodiment of the present invention, the surface tension of the particulate water-absorbing agent composition is preferably 45 mN/m or more, more preferably 50 mN/m or more, still more preferably 55 mN/m or more, particularly preferably 60 mN/m or more. The upper limit value is not particularly limited, and is preferably 75 mN/m or less from the viewpoint of balance with other physical properties.

When the surface tension is 45 mN/m or more, the return amount of the liquid when a pressure is applied to the absorber does not become too large, and thus the resin is suitable as an absorber of an absorbent article such as a disposable diaper. The surface tension can be controlled with an additive and the like added after surface crosslinking.

Mass-Average Particle Diameter (D50)

In one embodiment of the present invention, the mass-average particle diameter (D50) of the particulate water-absorbing agent composition is preferably 300 $\mu$m or more and 600 $\mu$m or less, more preferably 500 $\mu$m or less, still more preferably 450 $\mu$m or less. As a result, the balance among AAP, CRC, and SFC described above can be maintained.

Mass Proportion of Particles Having Particle Diameter of 850 $\mu$m or More

In one embodiment of the present invention, the mass proportion of the particles having a particle diameter of 850 $\mu$m or more in the particulate water-absorbing agent composition is preferably 3 mass% or less, more preferably 2 mass% or less, still more preferably 1 mass% or less. This reduces the feeling of being rubbed by the particulate water-absorbing agent composition and improves the feeling of wearing when the particulate water-absorbing agent composition according to the present invention is used in a sanitary product such as a thin disposable diaper, which is preferable.

Mass Proportion of Particles Having Particle Diameter of 300 $\mu$m or More and Less Than 850 $\mu$m

In one embodiment of the present invention, the mass proportion of particles having a particle diameter of 300 $\mu$m or more and less than 850 $\mu$m in the particulate water-absorbing agent composition is 50 mass% or more, preferably 55 mass% or more, more preferably 60 mass% or more. As a result, the balance among AAP, CRC, and SFC described above can be maintained.

Mass Proportion of Particles Having Particle Diameter of Less Than 150 $\mu$m

In one embodiment of the present invention, the mass proportion of the particles having a particle diameter of less than 150 $\mu$m in the particulate water-absorbing agent composition is preferably 5 mass% or less, more preferably 4 mass% or less, still more preferably 3 mass% or less, particularly preferably 2 mass% or less. As a result, the balance among AAP, CRC, and SFC described above can be maintained. In addition, it is preferable that the mass proportion of particles having a particle diameter of less than 150 $\mu$m is equal to or less than the upper limit value described above from the viewpoint of preventing the deterioration of the working environment due to the scattering of dust at the place where the particulate water-absorbing agent composition is handled.

3-3. Content of Nonionic Polymer in Particulate Water-Absorbing Agent Composition

The particles constituting the surface layer portion of the particulate water-absorbing agent composition are peeled off in the impact test. The particle group b is composed of the peeled particles and particles having a size of less than 300 $\mu$m that were present before the impact test, and the particle group a is composed of particles remaining after the particles constituting the surface layer portion were peeled. Thus, the particle group a is composed of particles constituting a portion other than the surface layer portion of the particulate water-absorbing agent composition. The content represented by C2 means the content of the polyalkylene glycol contained in the portion other than the surface layer portion of the particulate water-absorbing agent composition, that is, the inside. Further, the value represented by C1 - C2 means the amount of the nonionic polymer present in the surface layer portion, that is, the surface of the particulate water-absorbing agent composition.

In the particulate water-absorbing agent composition that satisfies all of (1) to (4), the content represented by C1, that is, the total value of the content of the polyalkylene glycol present inside the particulate water-absorbing agent composition and the content of the nonionic polymer present on the surface of the particulate water-absorbing agent composition is preferably within a range including the preferable ranges of the respective contents described later, and is preferably 0.025 mass% or more, more preferably 0.03 mass% or more, with respect to the mass of the solid content in the particulate water-absorbing agent composition. The content represented by C1 is preferably 0.55 mass% or less, more preferably 0.50 mass% or less with respect to the mass of the solid content in the particulate water-absorbing agent composition.

In the particulate water-absorbing agent composition satisfying all of (1) to (4), the content represented by C2, that is, the content of the polyalkylene glycol present inside the particulate water-absorbing agent composition is 0.005 mass% or more, preferably 0.01 mass% or more, more preferably 0.015 mass% or more, with respect to the mass of the solid content in the particle group a. The content represented by C2 is 0.15 mass% or less, preferably 0.14 mass% or less, more preferably 0.12 mass% or less, with respect to the mass of the solid content in the particle group a. It is preferable that the content represented by C2 is equal to or more than the lower limit value described above because the effect of improving caking resistance performance of the particulate water-absorbing agent composition can be sufficiently exhibited. It is preferable that the content represented by C2 is equal to or less than the upper limit value described above because deterioration of caking resistance performance due to excessive content of the polyalkylene glycol can be prevented.

In the particulate water-absorbing agent composition satisfying all of (1) to (4), the content represented by C1 - C2, that is, the content of the nonionic polymer present on the surface of the particulate water-absorbing agent composition is 0.02 mass% or more, preferably 0.023 mass% or more, more preferably 0.025 mass% or more. The content represented by C1 - C2 is 0.40 mass% or less, preferably 0.35 mass% or less. It is preferable that the content represented by C1 - C2 is equal to or more than the lower limit value described above because the effect of improving caking resistance performance of the particulate water-absorbing agent composition can be sufficiently exhibited. It is preferable that the content represented by C1 - C2 is equal to or less than the upper limit value described above from the viewpoint of preventing an increase in cost due to an excessive amount of use of the nonionic polymer.

C1 and C2 can be measured by the following methods (A) to (E), and specifically, can be measured by the method described in Examples.

(A) A calibration curve is prepared in advance by performing mass spectrometry by chromatography on an aqueous solution of a nonionic polymer having a known concentration.
(B) The particle group a or the particulate water-absorbing agent composition in an amount of 1 g is placed in an appropriate container and used as a measurement sample.
(C) Ultrapure water in an amount of 1000 g is added to the container with the measurement sample and stirred to swell the measurement sample. Here, the "ultrapure water" means water having a specific resistance of 15 MΩ·cm or more.
(D) After (C), the supernatant liquid not containing the swollen measurement sample in the container is recovered through filtration.
(E) The supernatant recovered in (D) is analyzed with a liquid chromatography mass spectrometer under the same conditions as those at the time of preparing the calibration curve, and the value of C1 or C2 is calculated in consideration of the calibration curve prepared in (A), the dilution rate of the measurement sample with respect to ultrapure water, and the solid content of the measurement sample.

[4] Absorbent Article

The particulate water-absorbing agent composition produced by the production method according to one embodiment of the present invention may be contained in an absorbent article. Thus, one aspect of the present invention also includes an absorbent article. An absorbent article according to one embodiment of the present invention is a method for producing an absorbent article using, as the particulate water-absorbing agent composition, a particulate water-absorbing agent composition produced by a method for producing a water-absorbing agent according to one embodiment of the present invention described above, the method being a method for producing an absorbent article including an absorber containing the particulate water-absorbing agent composition. In other words, the absorbent article according to one embodiment of the present invention is an absorbent article including the particulate water-absorbing agent composition according to one embodiment of the present invention.

In the present disclosure, the term "absorbent article" refers to an article disposed on or in proximity to a wearer's body to absorb and accommodate various exudates such as urine, feces, and blood emitted from the body. Specifically, the absorbent article includes disposable diapers and pants worn by infants, toddlers, and/or adults; absorbent insertion for disposable diapers and pants; and female care absorbent articles such as sanitary napkins and pantyliners.

The absorbent article can include a topsheet, a backsheet, an absorbent core, and optionally an absorption-diffusion system. The absorbent core is disposed between the backsheet and the topsheet, and the optional absorption-diffusion system is generally disposed between the absorbent core and the topsheet.

The particulate water-absorbing agent composition produced by the production method according to one embodiment of the present invention may be contained in an absorbent core of an absorbent article. The absorbent core may or may not include other water-absorbent materials, such as uncrosslinked cellulose fibers (pulp fibers). The absorbent core may contain the water-absorbing agent in an amount of at least 60 mass%, at least 75 mass%, at least 85 mass%, at least 95 mass%, at least 98 mass%, or 100 mass%.

"Disposable diapers" and "pants" refer to absorbent articles worn by infants, toddlers, and (adult) incontinent persons around the lower torso to surround the wearer's waist and legs, and particularly adapted to receive and accommodate urine and fecal waste. In the pants, the longitudinal edges of first and second waist regions (regions corresponding to portions in contact with the waist region on the front side of the body and the waist region on the back side of the body) are attached to each other to form a waist opening and leg openings in advance. The pants are disposed at a predetermined position of the wearer by inserting the legs of the wearer into the leg openings and causing the pants absorbent article to sideslip to a predetermined position around the lower torso of the wearer. The pants are not limited to this example but may be pre-formed by any suitable method including bonding portions of the absorbent article together using a reattachable and/or non-reattachable bond material (for example, stitching, welding, adhesives, adhesive bonding materials, and fasteners). The pants may be pre-formed at any position along the outer perimeter of the article (for example, side surface fastening and front waist portion fastening). In a disposable diaper, the waist opening and the leg openings are only formed when the disposable diaper is applied to a wearer by attaching longitudinal edges of a first waist region and a second waist region together (releasably) on both sides by a suitable fastening system. The suitable fastening system may include, for example, a tape tab including a hook material and a cooperating landing area (for example, a nonwoven web providing loops in a fastening system with hooks and loops).

Disposable diapers and pants may include stretchable leg cuffs and barrier leg cuffs that improve retention of liquids and other bodily exudates, especially in the region of leg openings. Typically, each leg cuff and barrier cuff includes one or more stretchable laces.

The "female care absorbent article" is a personal care product used by women to absorb and retain menstrual blood, vaginal discharge, and other bodily functional derivatives of female reproductive organs during menstruation. The female care absorbent article includes a pantyliner and a sanitary napkin.

One aspect of the present invention may also include a method for producing an absorbent article. The method for producing an absorbent article is a method for producing an absorbent article, the absorbent article including an absorber containing a particulate water-absorbing agent composition, in which the particulate water-absorbing agent composition produced by the method for producing a particulate water-absorbing agent composition according to one embodiment of the present invention described above is used as the particulate water-absorbing agent composition.

The method for producing the absorbent article is not particularly limited as long as the method uses the particulate water-absorbing agent composition produced by the method for producing a particulate water-absorbing agent composition according to one embodiment of the present invention described above, and may include, for example, a step of producing an absorbent core containing the particulate water-absorbing agent composition and a step of disposing the absorbent core between a backsheet and a topsheet.

The present invention includes aspects and forms shown in the following 1. to 13.

1. A method for producing a particulate water-absorbing agent composition containing a poly(meth)acrylic acid (salt)-based water-absorbent resin, the method including:

a monomer aqueous solution preparation step of preparing a (meth)acrylic acid (salt)-based monomer aqueous solution;
a polymerization step of polymerizing the (meth)acrylic acid (salt)-based monomer aqueous solution;
as an optional step, a hydrogel grinding step of subjecting a resulting crosslinked hydrogel polymer to gel grinding during polymerization or after polymerization;
a drying step of drying a particulate hydrogel;
as optional steps, a pulverizing step and a classification step of pulverizing and classifying a dried polymer; and
a surface crosslinking step of performing surface crosslinking on a water-absorbent resin before surface crosslinking,
in which
the particulate hydrogel is obtained through the polymerization step or both the polymerization step and the hydrogel grinding step,
the dried polymer is obtained through the drying step,
the water-absorbent resin before surface crosslinking is the dried polymer or a water-absorbent resin obtained by pulverizing and/or classifying the dried polymer,
at least one step selected from the monomer aqueous solution preparation step, the polymerization step, and the optional hydrogel grinding step includes adding a water-soluble polyalkylene glycol having a mass-average molecular weight of 3000 or less in an amount of from 0.01 mass% to 0.25 mass% with respect to a total mass of monomers contained in the (meth)acrylic acid (salt)-based monomer aqueous solution, and
after the surface crosslinking step, a nonionic polymer having a polyalkylene glycol chain in a structure thereof and having a mass-average molecular weight of from 300 to 15000 is added in an amount of from 0.02 mass% to 0.40 mass% with respect to the water-absorbent resin that has been surface-crosslinked.

2. The production method according to 1., in which the particulate water-absorbing agent composition has a surface tension of 45 mN/m or more.

3. The production method according to 1. or 2., in which the particulate water-absorbing agent composition has an absorption against pressure (AAP) of 20 g/g or more under pressure of 0.7 psi.

4. The production method according to any one of 1. to 3., in which the particulate water-absorbing agent composition has a fixed height absorption (FHA) at a height of 20 cm of 20 g/g or more.

5. A particulate water-absorbing agent composition including a poly(meth)acrylic acid (salt)-based water-absorbent resin as a main component and a nonionic polymer having a polyalkylene glycol chain in a structure, the particulate water-absorbing agent composition having a mass proportion of particles having a particle diameter of 300 μm or more and less than 850 μm of 50 mass% or more,

the particulate water-absorbing agent composition satisfying all of (1) to (4) shown below when:

(a) the nonionic polymer contained in the particulate water-absorbing agent composition is defined as A1, and a content of the nonionic polymer is defined as C1;

(b) the particulate water-absorbing agent composition is subjected to a predetermined impact test;

(c) the particulate water-absorbing agent composition that has been subjected to the impact test is sieved into a particle group a having a particle diameter of 300 μm or more and a particle group b having a particle diameter of less than 300 μm with a JIS standard sieve; and

(d) the nonionic polymer present in the particle group a is defined as A2, and a content of the nonionic polymer is defined as C2:

(1) A1 is a water-soluble polyalkylene glycol having a mass-average molecular weight of 3000 or less and a nonionic polymer having a polyalkylene glycol chain in the structure and having a mass-average molecular weight from 300 to 15000;

(2) A2 is a water-soluble polyalkylene glycol having a mass-average molecular weight of 3000 or less;

(3) C2 is 0.005 mass% or more and 0.15 mass% or less; and

(4) C1 - C2 is 0.02 mass% or more and 0.40 mass% or less.

6. The particulate water-absorbing agent composition according to 5., the particulate water-absorbing agent composition having a surface tension of 45 mN/m or more.

7. The particulate water-absorbing agent composition according to 5. or 6., the particulate water-absorbing agent composition having an absorption against pressure (AAP) of 20 g/g or more under pressure of 0.7 psi.

8. The particulate water-absorbing agent composition according to any one of 5. to 7., the particulate water-absorbing agent composition having a fixed height absorption (FHA) at a height of 20 cm of 20 g/g or more.

9. The particulate water-absorbing agent composition according to any one of 5. to 8., the particulate water-absorbing agent composition having a CRC of 25 g/g or more.

10. The particulate water-absorbing agent composition according to any one of 5. to 9., the particulate water-absorbing agent composition having a moisture absorption blocking ratio <1> (B. R. <1>) of 80 mass% or less.

11. The particulate water-absorbing agent composition according to any one of 5. to 10., the particulate water-absorbing agent composition having a mass-average particle diameter (D50) of 300 μm or more and 600 μm or less.

12. The particulate water-absorbing agent composition according to any one of 5. to 11., in which a mass proportion of particles having a particle diameter of 850 μm or more in the particulate water-absorbing agent composition is 3 mass% or less, and a mass proportion of particles having a particle diameter of less than 150 μm is 5 mass% or less.

13. An absorbent article including a particulate water-absorbing agent composition,

the absorbent article including the particulate water-absorbing agent composition according to any one of 5. to 12. as the particulate water-absorbing agent composition.

Examples

Hereinafter, the invention will be described with reference to Examples and Comparative Examples, but the present invention is not to be construed as being limited by these Examples and the like. Various physical properties described in the claims and Examples of the present invention are obtained through measurement and evaluation described later. When there is no specific description about room temperature and humidity, measurement was performed under conditions of room temperature (23 ± 2°C) and a relative humidity of 40 ± 10RH%.

Measurement and Evaluation of Physical Property Value of Water-Absorbent Resin and Particulate Water-Absorbing Agent Composition

The physical property values and the like of the water-absorbent resins obtained in the following Production Examples and/or the particulate water-absorbing agent compositions obtained in the following Examples and Comparative Examples were measured and evaluated by the following methods.

D50 (Mass-Average Particle Diameter) of Particulate Hydrogel

The mass-average particle diameter (D50) of the ground particulate hydrogel in terms of solid content was measured by the following method.

A particulate hydrogel (solid content α mass%) at a temperature from 20°C to 25°C in an amount of 20 g was added to 500 g of a 20 mass% sodium chloride aqueous solution containing 0.08 mass% EMAL 20C (surfactant, available from Kao Corporation) (hereinafter, the aqueous solution is referred to as "EMAL aqueous solution") to form a dispersion, and the dispersion was stirred at 300 rpm for 1 hour using a cylindrical stirrer chip having a length of 50 mm and a cross-sectional diameter of 7 mm (a cylindrical polypropylene container (capacity: about 1.14 L) having a height of 21 cm and a bottom diameter of 8 cm was used).

After completion of stirring, the dispersion was put into the central portion of JIS standard sieves (diameter 21 cm, mesh size of sieve: 8 mm/4 mm/2 mm/1 mm/0.60 mm/0.30 mm/0.15 mm/0.075 mm) placed on a turntable in an overlapping manner. After washing out the total particulate hydrogel on the sieves using 100 g of the EMAL aqueous solution, 6000 g of the EMAL aqueous solution was poured evenly from the top while rotating the sieves by hands (20 rpm) from a height of 30 cm using a shower (72 holes, liquid volume: 6.0 L/min) so that the water-pouring range (50 cm$^2$) was spread over the entire sieves, and the particulate hydrogel was classified. The classified particulate hydrogel on the first stage sieve was drained for about 2 minutes and then weighed. The hydrogel on the second stage and subsequent sieves were classified in the same manner, and the particulate hydrogel remaining on each sieve after draining was weighed.

From the mass of the particulate hydrogel remaining on each sieve, a mass proportion X (unit: mass%) to the entire particulate hydrogel was calculated from Formula (1) described below. The mesh size R (α) (unit: mm) of the sieve used for the particulate hydrogel having a solid content of α mass% remaining on the sieve was calculated according to Formula (2) described below. X and R (α) of the particulate hydrogel remaining on each sieve were plotted on a logarithmic probability paper, and a graph (particle size distribution) showing the relationship between the cumulative mass ratio of X and R (α) was created. From this graph, the particle diameter corresponding to a residual percentage of 50 mass% was read as the mass-average particle diameter (D50) of the particulate hydrogel.

$$X = (w/W) \times 100 \quad \text{Formula (1)}$$

$$R\ (\alpha) = (20/W)^{1/3} \times r \quad \text{Formula (2)}$$

Here, X, w, W, R (α), and r mean the following values.

X: Mass% of particulate hydrogel remaining on each sieve after classification and draining (unit: mass%)
w: Mass of each particulate hydrogel remaining on each sieve after classification and draining (unit: g)
W: Total mass of particulate hydrogel remaining on each sieve after classification and draining (unit: g)
R (α): Mesh size of sieve when particulate hydrogel converted to a solid content of α mass% is classified (unit: mm: calculated value)
r: Mesh size of JIS standard sieve used for classifying particulate hydrogel swollen in 20 mass% sodium chloride aqueous solution containing 0.08 mass% EMAL 20C (surfactant, available from Kao Corporation) (unit: mm: measured value)

σζ (Logarithmic Standard Deviation of Particle Size Distribution) of Particulate Hydrogel

The mass% of the particulate hydrogel remaining on each sieve was calculated by the same method as the method of D50 (mass-average particle diameter) of the particulate hydrogel, and the particle size distribution of the particulate hydrogel was plotted on a logarithmic probability paper. From the plot, the particle diameters on integrated sieve%R = 84.1 mass% (denoted as X1) and integrated sieve%R = 15.9 mass% (denoted as X2) were determined, and σζ (logarithmic standard deviation of particle size distribution) was determined based on Formula (3) described below.

$$\sigma\zeta = 0.5 \times \ln\ (X2/X1) \quad \text{Formula (3)}$$

The smaller the value of σζ, the narrower the particle size distribution.

Moisture Absorption Blocking Ratio <1> (B. R. <1>)

The moisture absorption blocking ratio <1> (B. R. <1>) of the water-absorbent resin and the particulate water-absorbing agent composition was measured by the following method.

Specifically, 2.0 g of the water-absorbent resin or the particulate water-absorbing agent composition was uniformly released in a cylindrical aluminum cup having a bottom surface diameter of 52 mm, and then allowed to stand for 40 minutes in a thermo-hygrostat (available from ESPEC CORPORATION; MODEL: SH-641) under a temperature of 40°C and a relative humidity of 75 ± 5%RH. After an elapse of 40 minutes, the water-absorbent resin or the particulate water-absorbing agent composition put in the aluminum cup was gently transferred onto a JIS standard sieve (THE IIDA TESTING SIEVE: inner diameter 80 mm) having a mesh size of 2000 $\mu$m (JIS 8.6 mesh), and classified for 40 seconds under the conditions of room temperature (from 20 to 25°C) and a relative humidity of 50%RH using a Ro-Tap sieve shaker (ES-65 sieve shaker available from SIEVE FACTORY IIDA CO., Ltd.; rotation speed: 230 rpm, number of impulses: 130 rpm). The mass W1 (g) of the water-absorbent resin or particulate water-absorbing agent composition remaining on the JIS standard sieve and the mass W2 (g) of the water-absorbent resin or particulate water-absorbing agent composition having passed through the JIS standard sieve were measured, and the moisture absorption blocking ratio <1> was calculated from Formula (4) described below.

Moisture absorption blocking ratio <1> (mass%) = {W1/(W1 + W2)} $\times$ 100 Formula (4)

As the value of the moisture absorption blocking ratio <1> is lower, the water-absorbent resin or the particulate water-absorbing agent composition is more excellent in caking resistance performance.

Moisture Absorption Blocking Ratio <2> (B. R. <2>)

The moisture absorption blocking ratio <2> (B. R. <2>) of the water-absorbent resin and the particulate water-absorbing agent composition was measured by performing the same operation as the moisture absorption blocking ratio <1> except that the leaving time in the thermo-hygrostat was changed from 40 minutes to 1 hour.

Value obtained by subtracting B. R. of particulate water-absorbing agent composition from B. R. of water-absorbent resin after surface crosslinking ($\Delta$B. R.)

The $\Delta$B. R. of the particulate water-absorbing agent composition was calculated from Formula (5) described below.

$$\Delta B.\ R.\ (\text{mass}\%) = W5 - W6 \quad \text{Formula (5)}$$

Here, W5 and W6 mean the following values.

W5: B. R. (unit: mass%) of water-absorbent resin after surface crosslinking used for production of particulate water-absorbing agent composition
W6: B. R. (unit: mass%) of particulate water-absorbing agent composition

The larger the $\Delta$B. R., the higher the effect of improving caking resistance performance due to the additive added to the water-absorbent resin after surface crosslinking. To calculate appropriate $\Delta$B. R., W5 and W6 are preferably from 1 mass% to 99 mass%. For example, when W5 is 0 mass%, even though the caking resistance performance is improved by the additive added to the water-absorbent resin after surface crosslinking, W6 is 0 mass%, and as a result, $\Delta$B. R. is calculated as 0 mass%. That is, the effect of improving caking resistance performance due to the additive added to the water-absorbent resin after surface crosslinking cannot be appropriately expressed by $\Delta$B. R., which is not preferable. For example, when W5 is 20 mass% and W6 is 0 mass%, $\Delta$B. R. is calculated to be 20 mass%, but it cannot be determined whether the original effect of improving caking resistance performance due to the additive added to the water-absorbent resin after surface crosslinking is 20 mass% or more than 20 mass%, which is not preferable. Thus, when B. R. is measured by the method of B. R. <1>, and either W5 or W6 is not from 1 mass% to 99 mass%, or neither W5 or W6 was from 1 mass% to 99 mass%, it is preferable to measure B. R. by the method of B. R. <2>. It is preferable to find a method by which W5 and W6 are from 1 mass% to 99 mass% even when B. R. is measured by any of the methods B. R. <1> and B. R. <2>, and measure B. R. by the method to calculate $\Delta$B. R. when either W5 or W6 is not from 1 mass% to 99 mass%, or neither W5 or W6 was from 1 mass% to 99 mass%. When the effect of improving caking resistance performance due to the additive is compared by $\Delta$B. R., $\Delta$B. R. is calculated by adopting B. R. obtained from the same measurement method.

Absorption Against Pressure (AAP)

AAP of the water-absorbent resin and the particulate water-absorbing agent composition was measured in accordance with NWSP 242.0. R2 (19). Specifically, 0.9 g of the water-absorbent resin or the particulate water-absorbing agent composition was swollen under pressure of 4.83 kPa (49 g/cm$^2$, 0.7 psi) for 1 hour using a large excess of a 0.9 mass% sodium chloride aqueous solution, and then AAP (absorption against pressure) (unit: g/g) was measured.

Fixed Height Absorption (FHA) at Height of 20 cm

FHA of the water-absorbent resin and the particulate water-absorbing agent composition was measured in accordance with the measurement method described in US 2005/0003191.

Surface Tension

The surface tension of the particulate water-absorbing agent composition was measured by the following method.
First, 40 ml of a 0.9 mass% sodium chloride aqueous solution adjusted to 23°C to 24°C was put in a 50 ml sufficiently washed beaker, and the surface tension of the 0.9 mass% sodium chloride aqueous solution was measured using a surface tensiometer (K11 automatic surface tensiometer available from KRUSS GmbH). In this measurement, the value of surface tension must be in the range from 72 mN/m to 74 mN/m. Then, into the beaker containing 40 ml of the 0.9 mass% sodium chloride aqueous solution after surface tension measurement adjusted to 23°C to 24°C, a cylindrical stirrer sufficiently washed having a length of 25 mm and a cross-sectional diameter of 7 mm and 0.5 g of the particulate water-absorbing agent composition were put, and stirred at 350 rpm for 3 minutes. After 3 minutes, the stirring was stopped, and the mixture was allowed to stand for 2 minutes. After the particulate water-absorbing agent composition was settled, the surface tension of the supernatant was measured again through the same operation. In the present measurement, a plate method using a platinum plate was adopted, and the plate was used after being sufficiently washed with deionized water and heated and washed with a gas burner before each measurement.

Centrifuge Retention Capacity (CRC)

CRC of the water-absorbent resin and the particulate water-absorbing agent composition was measured in accordance with NWSP 241.0. R2 (19). Specifically, 0.2 g of the water-absorbent resin or the particulate water-absorbing agent composition was put in a bag made of a nonwoven fabric, and then immersed in a large excess of a 0.9 mass% sodium chloride aqueous solution for 30 minutes to freely swell the water-absorbent resin or the particulate water-absorbing agent composition. Thereafter, the water-absorbent resin or the particulate water-absorbing agent composition was dehydrated for 3 minutes using a centrifuge (250 G), and then the centrifuge retention capacity (CRC) (unit: g/g) was measured.

Physiological Saline Flow Conductivity (SFC)

The physiological saline flow conductivity (SFC) of the water-absorbent resin and the particulate water-absorbing agent composition (unit: $\times$ 10$^{-7}$ cm$^3$·sec/g) was measured in accordance with the measurement method described in US 5669894.
Specifically, 1.500 g of the water-absorbent resin or the particulate water-absorbing agent composition was uniformly placed in a container, then the water-absorbent resin or the particulate water-absorbing agent composition was immersed in artificial urine, and the water-absorbent resin or the particulate water-absorbing agent composition was swollen while being pressurized at a pressure of 2.07 kPa. The artificial urine was prepared by mixing 0.25 g of calcium chloride dihydrate, 2.0 g of potassium chloride, 0.50 g of magnesium chloride hexahydrate, 2.0 g of sodium sulfate, 0.85 g of ammonium dihydrogen phosphate, 0.15 g of diammonium hydrogen phosphate, and 994.25 g of pure water.
After an elapse of 60 minutes from the pressurization, the height (cm) of the gel layer as the swollen water-absorbent resin or particulate water-absorbing agent composition was recorded. Then, 0.69 mass% saline was allowed to pass through the gel layer while the gel layer was pressurized at a pressure of 2.07 kPa. The room temperature at this time was adjusted to 20 to 25°C. Then, the amount of saline passing through the gel layer was recorded at intervals of 20 seconds using a balance and a computer, and the flow rate Fs (T) of the saline passing through the gel layer was measured. The flow rate Fs (T) is measured by dividing the mass of saline passed (g), which increases every 20 seconds, by the transit time (s). The time at which the hydrostatic pressure of the saline became constant and a stable flow rate was obtained was defined as Ts, and the flow rate Fs (T = 0) was calculated using data measured for 10 minutes starting from Ts. That is, Fs (T) was plotted with respect to time, and Fs (T = 0) was calculated based on the result obtained by the least squares method. Fs (T = 0) is the initial flow rate (g/s) of saline through the gel layer. Then, the saline flow conductivity (SFC) was calculated from Formula (6) described below.

$$SFC = \{Fs\ (T = 0) \times L_0\}/(\rho \times A \times \Delta P)\ \text{Formula (6)}$$

Here, $L_0$, $\rho$, A, and $\Delta P$ mean the following values.

$L_0$: Height of gel layer (unit: cm)
$\rho$: Density of saline (unit: $g/cm^3$)
A: Cross-sectional area of gel layer (unit: $cm^2$)
$\Delta P$: Hydrostatic pressure applied to gel layer (unit: $dyne/cm^2$).

Free Swell Rate (FSR)

The free swell rate (FSR) of the water-absorbent resin and the particulate water-absorbing agent composition was a rate ($g/(g \cdot s)$) when 1.0 g of the water-absorbent resin or the particulate water-absorbing agent composition absorbed 20 g of a 0.9 mass% sodium chloride aqueous solution, and was measured in accordance with the measurement method described in WO 2009/016055.

Quantification of Nonionic Polymer by LC-MS

Pretreatment 1: Impact Test

The particulate water-absorbing agent composition in an amount of 30 g obtained in each Example and 10 g of glass beads (soda lime glass beads for precision fractionation filling) having a diameter of 6 mm were placed in a glass container (available from Nihon Yamamura Glass Co., Ltd./mayonnaise 225) having a diameter of 6 cm and a height of 11 cm. Subsequently, the container was sealed using a resin inner lid and an outer lid (for example, an inner lid and an outer lid attached to TOP CORPORATION/product code: 604-003/product name: mayonnaise bottle PP cap set) for the container. Thereafter, the particulate water-absorbing agent composition was ground using a paint shaker (available from Toyo Seiki Seisaku-sho, Ltd./disperser for test: product No. 488). The pulverizing was performed by shaking the paint shaker at 800 times/min. The details of the paint shaker are described in JP H9-235378. The shaking time was adjusted for each particulate water-absorbing agent composition to be used so as to satisfy Formula (7) described below.

0.2 < (mass of particle group a)/(total mass of particle group a and particle group b) < 0.3          Formula (7)

Subsequently, after the shaking, the glass beads were removed using JIS standard sieves having a mesh size of 2 mm.

Pretreatment 2: Sieving

The ground particulate water-absorbing agent composition obtained in the impact test in the pretreatment 1 was sieved into a particle group a having a particle diameter of 300 $\mu$m or more and a particle group b having a particle diameter of less than 300 $\mu$m using a JIS standard sieve having a mesh size of 300 $\mu$m.

Qualitative and Quantitative Determination: Nonionic Polymer

In a cylindrical polypropylene container (capacity: about 1.14 L) having a height of 21 cm and a bottom diameter of 8 cm, 1 g of the particle group a obtained by the sieving and 1000 g of ultrapure water were put, and the mixture was stirred at 500 rpm for 1 hour using a cylindrical stirrer chip having a length of 50 mm and a cross-sectional diameter of 7 mm. After the stirring, the supernatant in which the swollen particulate water-absorbing agent composition was not present was filtered using a sample pretreatment filter (GL chromatographic disk, 25A, 0.2 $\mu$m, Cat. No. 5040-28502), and then the nonionic polymer contained in the particle group a was qualitatively and quantitatively determined using a liquid chromatography mass spectrometer (LC-MS).

When the nonionic polymer contained in the particulate water-absorbing agent composition before the impact test was qualitatively and quantitatively determined, the procedure described in the section of "Qualitative and Quantitative Determination: Nonionic Polymer" was performed by changing the particle group a to the particulate water-absorbing agent composition without performing the pretreatment 1: impact test or the pretreatment 2: sieving.

LC-MS was performed under the following measurement conditions.

Eluent: A solution obtained by mixing an ultrapure water containing 0.1 mass% of formic acid and 0.01 mol/L of ammonium formate with an acetonitrile solution containing 0.1 mass% of formic acid at a volume ratio of 6:4
Column: InertSustain C18 (particle diameter: 2 μm, inner diameter: 2.1 mm, length: 100 mm, Cat.No. 5020-14354, available from GL Sciences Inc.)
Column temperature: 40°C
Flow rate: 0.35 ml/min
Detector: RI, UV, QDa

The content of the nonionic polymer in the particle group a and the particulate water-absorbing agent composition before the impact test was determined in consideration of the dilution rate of the particle group a or the particulate water-absorbing agent composition with respect to ultrapure water using a calibration curve obtained by measuring a nonionic polymer standard solution having a known concentration as an external standard.

The content of the nonionic polymer in the particle group a and the particulate water-absorbing agent composition before the impact test was a value obtained by correcting the water content. That is, a value converted with respect to the solid content in the particle group a or the particulate water-absorbing agent composition before the impact test obtained from the solid content described later was used.

Solid Content

The solid content of the particulate water-absorbing agent composition was measured by the following method.
About 1 g of the particulate water-absorbing agent composition was weighed (mass: W7 (g)), and uniformly released onto a cylindrical aluminum cup having a bottom surface diameter of 52 mm (mass: W8 (g)). Thereafter, the resulting product was allowed to stand in a windless dryer at 180°C for 3 hours and dried. After drying, the total mass (mass: W9 (g)) of the particulate water-absorbing agent composition and the aluminum cup was measured. The solid content of the particulate water-absorbing agent composition was calculated from Formula (8) described below.

$$\text{Solid content (mass\%)} = \{(W9 - W8)/W7\} \times 100 \quad \text{Formula (8)}$$

The relationship between the solid content and the water content is as shown in Formula (9) described below.

$$\text{Solid content (mass\%)} = 100 - \text{water content (mass\%)} \quad \text{Formula (9)}$$

Production Example 1

Monomer Aqueous Solution Preparation Step

Into a polypropylene container having a capacity of 2 L, 422.0 parts by mass of acrylic acid, 173.9 parts by mass of a 48.5 mass% sodium hydroxide aqueous solution, 2.5 parts by mass of polyethylene glycol diacrylate (average molecular weight: 523), 1.3 parts by mass of a 2.0 mass% diethylenetriamine pentaacetic acid/trisodium aqueous solution, and 403.3 parts by mass of deionized water were charged and mixed to prepare a monomer aqueous solution (1'). The liquid temperature of the monomer aqueous solution (1') exceeded 40°C because of the heat of neutralization and the heat of dissolution generated in the mixing process.

Polymerization Step

Then, the monomer aqueous solution (1') was cooled with stirring, and when the liquid temperature reached 40°C, 178.7 parts by mass of a 48.5 mass% sodium hydroxide aqueous solution adjusted to 40°C was charged into the monomer aqueous solution (1') over about 20 seconds in an atmosphere open state, and mixed (neutralization in the second stage was started). A monomer aqueous solution (1) was thus prepared. At this time, the liquid temperature of the monomer aqueous solution (1) increased to about 78°C because of the heat of neutralization and the heat of dissolution generated in the mixing process. In addition, immediately after the monomer aqueous solution (1') was started to be mixed with the sodium hydroxide aqueous solution, a precipitate was observed, but the monomer aqueous solution gradually dissolved, and the prepared monomer aqueous solution (1) became a transparent homogeneous solution.

Then, under stirring, nitrogen gas was introduced into the monomer aqueous solution (1) for 5 seconds under the conditions of a pressure of 0.1 MPa and a flow rate of 0.1 L/min using a gas filtration tube (available from TOP CORPORATION, particle number #4). Subsequently, 18.4 parts by mass of a 4.5 mass% sodium persulfate aqueous solution was added to the monomer aqueous solution (1) into which nitrogen gas was introduced. Thereafter, the monomer aqueous solution (1) was immediately poured into a tray-shaped container (bottom surface 340 mm × 340 mm, height 25 mm, inner surface: Teflon (trade name) coating) made of stainless steel in an atmosphere open state. The time from the start of the second stage neutralization to the pouring of the monomer aqueous solution (1) into the tray-shaped container was 65 seconds. The tray-shaped container was heated in advance to a surface temperature of 50°C using a hot plate (NEO HOTPLATE HI-1000, available from Iuchi Seieido Co., Ltd.) before the monomer aqueous solution (1) was poured into the tray-shaped container.

The monomer aqueous solution (1) was poured into the tray-shaped container, and then a polymerization reaction was started within 1 minute. In the polymerization reaction, the polymerization of the monomer aqueous solution (1) proceeded while expanding and foaming in all directions while generating water vapor. Thereafter, the obtained polymer shrank to a size slightly larger than the bottom surface of the tray-shaped container. After an elapse of 2 minutes from the start of the polymerization reaction, a hydrogel (1), which was the obtained polymer, was taken out from the tray-shaped container. The series of operations was performed in an atmosphere open state.

Hydrogel Grinding Step

Then, the hydrogel (1) obtained in the polymerization reaction was cut so that the mass per one piece was about 60 g, and then subjected to gel grinding using a meat chopper (HL-G22SN, plate hole diameter 6.0 mm/available from REMACOM CO., LTD.) to obtain a particulate hydrogel (1). The input amount of the hydrogel (1) was about 360 g/min, and in parallel with the input of the hydrogel (1), gel grinding was performed while deionized water adjusted to 90°C was added to the meat chopper at 50 g/min.

The particulate hydrogel (1) had a D50 (mass-average particle diameter) of 400 $\mu$m and a $\sigma\zeta$ (logarithmic standard deviation of particle size distribution) of 0.93.

Drying Step

Then, the particulate hydrogel (1) was spread and placed on a wire mesh having a mesh size of 300 $\mu$m, and placed in a hot-air dryer. Thereafter, the particulate hydrogel (1) was dried by passing hot air at 190°C for 30 minutes to obtain a dried polymer (1). There was no undried product in the dried polymer (1).

Classification Step

Then, the dried polymer (1) was charged into a roll mill (WML type roll pulverizing apparatus, available from Inokuchi Giken Co., Ltd.), ground, and then classified using two types of JIS standard sieves having mesh sizes of 710 $\mu$m and 150 $\mu$m. Through this operation, a water-absorbent resin (1) before surface crosslinking in an irregularly crushed shape, which passed through the sieve with a mesh size of 710 $\mu$m and remained on the sieve with a mesh size of 150 $\mu$m, was obtained.

Surface Crosslinking Step

Then, to 100 parts by mass of the water-absorbent resin (1) before surface crosslinking, a surface crosslinking agent aqueous solution composed of 0.2 parts by mass of 1,6-hexanediol, 0.4 parts by mass of triethylene glycol, and 3.0 parts by mass of deionized water was added by spraying and mixed uniformly. Thereafter, the obtained mixture was heat-treated at 210°C for 40 minutes to perform surface crosslinking. Then, the mixture after the heat treatment was classified using two types of JIS standard sieves having mesh sizes of 710 $\mu$m and 150 $\mu$m, respectively. Through this operation, a water-absorbent resin (1) after surface crosslinking, which passed through the sieve with a mesh size of 710 $\mu$m and remained on the sieve with a mesh size of 150 $\mu$m, was obtained. Various physical properties of the obtained water-absorbent resin (1) after surface crosslinking are shown in Table 1.

Production Example 2

A water-absorbent resin (2) after surface crosslinking was obtained by performing the same operations as those of Production Example 1 except that the amount of the 2.0 mass% diethylenetriamine pentaacetic acid/trisodium aqueous solution was changed to 2.6 parts by mass, the amount of the deionized water was changed to 400.5 parts by mass, and 1.6 parts by mass of a 50 mass% malic acid aqueous solution was additionally charged in the monomer aqueous solution preparation step of Production Example 1. Various physical properties of the obtained water-absorbent resin (2) after surface crosslinking are shown in Table 1.

The particulate hydrogel (2) obtained in the hydrogel grinding step had a D50 (mass-average particle diameter) of 405 μm and a σζ (logarithmic standard deviation of particle size distribution) of 0.95.

Production Example 3

A water-absorbent resin (3) after surface crosslinking was obtained by performing the same operations as those of Production Example 1 except that the surface crosslinking agent aqueous solution used in the surface crosslinking step of Production Example 1 was changed to a surface crosslinking agent aqueous solution composed of 0.4 parts by mass of ethylene carbonate, 0.7 parts by mass of propylene glycol, and 2.9 parts by mass of deionized water. Various physical properties of the obtained water-absorbent resin (3) after surface crosslinking are shown in Table 1.
The particulate hydrogel (3) obtained in the hydrogel grinding step had a D50 (mass-average particle diameter) of 400 μm and a σζ (logarithmic standard deviation of particle size distribution) of 0.93.

Production Example 4

A water-absorbent resin (4) after surface crosslinking was obtained by performing the same operations as those of Production Example 1 except that the amount of deionized water was changed to 403.1 parts by mass and 0.2 parts by mass of polyethylene glycol 600 (mass-average molecular weight: 600, available from FUJIFILM Wako Pure Chemical Corporation) was additionally charged in the monomer aqueous solution preparation step of Production Example 1. The addition proportion of polyethylene glycol 600 to the total mass of the monomers contained in the monomer aqueous solution was 0.04 mass%. Various physical properties of the obtained water-absorbent resin (4) after surface crosslinking are shown in Table 1.
The particulate hydrogel (4) obtained in the hydrogel grinding step had a D50 (mass-average particle diameter) of 390 μm and a σζ (logarithmic standard deviation of particle size distribution) of 0.92.

Production Example 5

A water-absorbent resin (5) after surface crosslinking was obtained by performing the same operations as those of Production Example 1 except that the amount of deionized water was changed to 402.6 parts by mass and 0.7 parts by mass of polyethylene glycol 600 (mass-average molecular weight: 600, available from FUJIFILM Wako Pure Chemical Corporation) was additionally charged in the monomer aqueous solution preparation step of Production Example 1. The addition proportion of polyethylene glycol 600 to the total mass of the monomers contained in the monomer aqueous solution was 0.14 mass%. Various physical properties of the obtained water-absorbent resin (5) after surface crosslinking are shown in Table 1.
The particulate hydrogel (5) obtained in the hydrogel grinding step had a D50 (mass-average particle diameter) of 395 μm and a σζ (logarithmic standard deviation of particle size distribution) of 0.91.

Production Example 6

A water-absorbent resin (6) after surface crosslinking was obtained by performing the same operations as those of Production Example 4 except that the polyethylene glycol used was changed to 0.2 parts by mass of polyethylene glycol 400 (mass-average molecular weight: 400, available from FUJIFILM Wako Pure Chemical Corporation) in the monomer aqueous solution preparation step of Production Example 4 and the surface crosslinking agent aqueous solution used was changed to the surface crosslinking agent aqueous solution composed of 0.4 parts by mass of ethylene carbonate, 0.7 parts by mass of propylene glycol, and 2.9 parts by mass of deionized water used in Production Example 3 in the surface crosslinking step. The addition proportion of polyethylene glycol 400 to the total mass of the monomers contained in the monomer aqueous solution was 0.04 mass%. Various physical properties of the obtained water-absorbent resin (6) after surface crosslinking are shown in Table 1.
The particulate hydrogel (6) obtained in the hydrogel grinding step had a D50 (mass-average particle diameter) of 393 μm and a σζ (logarithmic standard deviation of particle size distribution) of 0.95.

Production Example 7

A water-absorbent resin (7) after surface crosslinking was obtained by performing the same operations as those of Production Example 6 except that the polyethylene glycol used was changed to 0.2 parts by mass of polyethylene glycol 1000 (mass-average molecular weight: 1000, available from FUJIFILM Wako Pure Chemical Corporation) in the monomer aqueous solution preparation step of Production Example 6. The addition proportion of polyethylene glycol 1000 to the total mass of the monomers contained in the monomer aqueous solution was 0.04 mass%. Various physical properties of the obtained water-absorbent resin (7) after surface crosslinking are shown in Table 1.

The particulate hydrogel (7) obtained in the hydrogel grinding step had a D50 (mass-average particle diameter) of 398 μm and a σζ (logarithmic standard deviation of particle size distribution) of 0.92.

Production Example 8

A water-absorbent resin (8) after surface crosslinking was obtained by performing the same operations as those of Production Example 6 except that the polyethylene glycol used was changed to 0.2 parts by mass of polyethylene glycol 2000 (mass-average molecular weight: 2000, available from FUJIFILM Wako Pure Chemical Corporation) in the monomer aqueous solution preparation step of Production Example 6. The addition proportion of polyethylene glycol 2000 to the total mass of the monomers contained in the monomer aqueous solution was 0.04 mass%. Various physical properties of the obtained water-absorbent resin (8) after surface crosslinking are shown in Table 1.

The particulate hydrogel (8) obtained in the hydrogel grinding step had a D50 (mass-average particle diameter) of 396 μm and a σζ (logarithmic standard deviation of particle size distribution) of 0.94.

Production Example 9

A water-absorbent resin (9) after surface crosslinking was obtained by performing the same operations as those of Production Example 4 except that the amount of the 2.0 mass% diethylenetriamine pentaacetic acid/trisodium aqueous solution was changed to 2.6 parts by mass, the amount of the deionized water was changed to 400.2 parts by mass, and 1.6 parts by mass of the 50 mass% malic acid aqueous solution was additionally charged in the monomer aqueous solution preparation step of Production Example 4. The addition proportion of polyethylene glycol 600 to the total mass of the monomers contained in the monomer aqueous solution was 0.04 mass%. Various physical properties of the obtained water-absorbent resin (9) after surface crosslinking are shown in Table 1.

The particulate hydrogel (9) obtained in the hydrogel grinding step had a D50 (mass-average particle diameter) of 389 μm and a σζ (logarithmic standard deviation of particle size distribution) of 0.90.

Production Example 10

Monomer Aqueous Solution Preparation Step

Into a polypropylene container having a capacity of 2 L, 422.0 parts by mass of acrylic acid, 173.9 parts by mass of a 48.5 mass% sodium hydroxide aqueous solution, 1.2 parts by mass of polyethylene glycol diacrylate (average molecular weight: 523), 1.3 parts by mass of a 2.0 mass% diethylenetriamine pentaacetic acid/trisodium aqueous solution, and 404.5 parts by mass of deionized water were charged and mixed to prepare a monomer aqueous solution (10'). The liquid temperature of the monomer aqueous solution (10') exceeded 40°C because of the heat of neutralization and the heat of dissolution generated in the mixing process.

Polymerization Step

Then, the monomer aqueous solution (10') was cooled with stirring, and when the liquid temperature reached 40°C, 178.7 parts by mass of a 48.5 mass% sodium hydroxide aqueous solution adjusted to 40°C was charged into the monomer aqueous solution (10') over about 20 seconds in an atmosphere open state, and mixed (neutralization in the second stage was started). A monomer aqueous solution (10) was thus prepared. At this time, the liquid temperature of the monomer aqueous solution (10) increased to about 77°C because of the heat of neutralization and the heat of dissolution generated in the mixing process. In addition, immediately after the monomer aqueous solution (10') was started to be mixed with the sodium hydroxide aqueous solution, a precipitate was observed, but the monomer aqueous solution gradually dissolved, and the prepared monomer aqueous solution (10) became a transparent homogeneous solution.

Then, under stirring, nitrogen gas was introduced into the monomer aqueous solution (10) for 5 seconds under the conditions of a pressure of 0.1 MPa and a flow rate of 0.1 L/min using a gas filtration tube (available from TOP CORPORATION, particle number #4). Subsequently, 18.4 parts by mass of a 4.5 mass% sodium persulfate aqueous solution was added to the monomer aqueous solution (10) into which nitrogen gas was introduced. Thereafter, the monomer aqueous solution (10) was immediately poured into a tray-shaped container (bottom surface 340 mm × 340 mm, height 25 mm, inner surface: Teflon (trade name) coating) made of stainless steel in an atmosphere open state. The time from the start of the second stage neutralization to the pouring of the monomer aqueous solution (10) into the tray-shaped container was 65 seconds. The tray-shaped container was heated in advance to a surface temperature of 50°C using a hot plate (NEO HOTPLATE HI-1000, available from Iuchi Seieido Co., Ltd.) before the monomer aqueous solution (10) was poured into the tray-shaped container.

The monomer aqueous solution (10) was poured into the tray-shaped container, and then a polymerization reaction was started within 1 minute. In the polymerization reaction, the polymerization of the monomer aqueous solution (10) proceeded while expanding and foaming in all directions while generating water vapor. Thereafter, the obtained polymer shrank to a size slightly larger than the bottom surface of the tray-shaped container. After an elapse of 2 minutes from the start of the polymerization reaction, a hydrogel (10), which was the obtained polymer, was taken out from the tray-shaped container. The series of operations was performed in an atmosphere open state.

Hydrogel Grinding Step

Then, the hydrogel (10) obtained in the polymerization reaction was cut so that the mass per one piece was about 60 g, and then subjected to gel grinding using a meat chopper (HL-G22SN, plate hole diameter 8.0 mm/available from REMACOM CO., LTD.) to obtain a particulate hydrogel (10). The input amount of the hydrogel (10) was about 360 g/min, and in parallel with the input of the hydrogel (10), gel grinding was performed while deionized water adjusted to 90°C was added to the meat chopper at 50 g/min.

The particulate hydrogel (10) had a D50 (mass-average particle diameter) of 915 $\mu$m and a $\sigma\zeta$ (logarithmic standard deviation of particle size distribution) of 1.04.

Drying Step

Then, the particulate hydrogel (10) was spread and placed on a wire mesh having a mesh size of 300 $\mu$m, and placed in a hot-air dryer. Thereafter, the particulate hydrogel (10) was dried by passing hot air at 190°C for 30 minutes to obtain a dried polymer (10). There was no undried product in the dried polymer (10).

Classification Step

Then, the dried polymer (10) was charged into a roll mill (WML type roll pulverizing apparatus, available from Inokuchi Giken Co., Ltd.), ground, and then classified using two types of JIS standard sieves having mesh sizes of 710 $\mu$m and 150 $\mu$m, respectively. Through this operation, a water-absorbent resin (10) before surface crosslinking in an irregularly crushed shape, which passed through the sieve with a mesh size of 710 $\mu$m and remained on the sieve having a mesh size of 150 $\mu$m, was obtained.

Surface Crosslinking Step

Then, to 100 parts by mass of the water-absorbent resin (10) before surface crosslinking, a surface crosslinking agent aqueous solution composed of 0.4 parts by mass of ethylene carbonate, 0.7 parts by mass of propylene glycol, and 2.9 parts by mass of deionized water used in Production Example 3 was added by spraying, and mixed uniformly. Thereafter, the obtained mixture was heat-treated at 210°C for 40 minutes to perform surface crosslinking. Then, the mixture after the heat treatment was classified using two types of JIS standard sieves having mesh sizes of 710 $\mu$m and 150 $\mu$m, respectively. Through this operation, a water-absorbent resin (10) after surface crosslinking, which passed through the sieve having a mesh size of 710 $\mu$m and remained on the sieve with a mesh size of 150 $\mu$m, was obtained. Various physical properties of the obtained water-absorbent resin (10) after surface crosslinking are shown in Table 1.

Production Example 11

A water-absorbent resin (11) after surface crosslinking was obtained by performing the same operations as those of Production Example 10 except that the amount of deionized water was changed to 404.3 parts by mass, and 0.2 parts by mass of polyethylene glycol 600 (mass-average molecular weight: 600, available from FUJIFILM Wako Pure Chemical Corporation) was additionally charged in the monomer aqueous solution preparation step of Production Example 10. The addition proportion of polyethylene glycol 600 to the total mass of the monomers contained in the monomer aqueous solution was 0.04 mass%. Various physical properties of the obtained water-absorbent resin (11) after surface crosslinking are shown in Table 1.

The particulate hydrogel (11) obtained in the hydrogel grinding step had a D50 (mass-average particle diameter) of 905 $\mu$m and a $\sigma\zeta$ (logarithmic standard deviation of particle size distribution) of 1.02.

Production Example 12

A water-absorbent resin (12) after surface crosslinking was obtained by performing the same operations as those of Production Example 10 except that the amount of deionized water was changed to 403.0 parts by mass, and 1.6 parts by mass of polyethylene glycol 600 (mass-average molecular weight: 600, available from FUJIFILM Wako Pure Chemical Corporation) was additionally charged in the monomer aqueous solution preparation step of Production Example 10. The addition proportion of polyethylene glycol 600 to the total mass of the monomers contained in the monomer aqueous solution was 0.30 mass%. Various physical properties of the obtained water-absorbent resin (12) after surface crosslinking are shown in Table 1.

The particulate hydrogel (12) obtained in the hydrogel grinding step had a D50 (mass-average particle diameter) of 908 $\mu$m and a $\sigma\zeta$ (logarithmic standard deviation of particle size distribution) of 1.03.

Production Example 13

A water-absorbent resin (13) after surface crosslinking was obtained by performing the same operations as those of Production Example 1 except that the amount of deionized water was changed to 403.2 parts by mass, and 0.1 parts by mass of polyethylene glycol 600 (mass-average molecular weight: 600, available from FUJIFILM Wako Pure Chemical Corporation) was additionally charged in the monomer aqueous solution preparation step of Production Example 1. The addition proportion of polyethylene glycol 600 to the total mass of the monomers contained in the monomer aqueous solution was 0.02 mass%. Various physical properties of the obtained water-absorbent resin (13) after surface crosslinking are shown in Table 1.

The particulate hydrogel (13) obtained in the hydrogel grinding step had a D50 (mass-average particle diameter) of 388 $\mu$m and a $\sigma\zeta$ (logarithmic standard deviation of particle size distribution) of 0.90.

Production Example 14

A water-absorbent resin (14) after surface crosslinking was obtained by performing the same operations as those of Production Example 1 except that the amount of deionized water was changed to 402.3 parts by mass, and 1.03 parts by mass of polyethylene glycol 600 (mass-average molecular weight: 600, available from FUJIFILM Wako Pure Chemical Corporation) was additionally charged in the monomer aqueous solution preparation step of Production Example 1. The addition proportion of polyethylene glycol 600 to the total mass of the monomers contained in the monomer aqueous solution was 0.20 mass%. Various physical properties of the obtained water-absorbent resin (14) after surface crosslinking are shown in Table 1.

The particulate hydrogel (14) obtained in the hydrogel grinding step had a D50 (mass-average particle diameter) of 380 $\mu$m and a $\sigma\zeta$ (logarithmic standard deviation of particle size distribution) of 0.89.

| | Monomer aqueous solution | | Water-absorbent resin after surface crosslinking | | | | | | | | |
| | Weight average of polyethylene glycol used Molecular weight [-] | Addition amount of polyethylene glycol [mass%*1] | Name | Physical properties | | | | | | | |
| | | | Water-absorbent resin after surface crosslinking | B.R.<1> [mass%] | B.R.<2> [mass%] | CRC [g/g] | AAP0.7 [g/g] | SFC [*2] | FSR [g/(g·s)] | FHA [g/g] |
| Production Example 1 | - | - | (1) | 99 | - | 29.0 | 25.5 | 27 | 0.39 | 26.0 |
| Production Example 2 | - | - | (2) | 99 | - | 29.2 | 25.4 | 28 | 0.38 | 26.2 |
| Production Example 3 | - | - | (3) | 99 | - | 28.9 | 25.1 | 29 | 0.40 | 25.9 |
| Production Example 4 | 600 | 0.04 | (4) | 98 | - | 29.5 | 26.0 | 24 | 0.40 | 26.4 |
| Production Example 5 | 600 | 0.14 | (5) | 88 | - | 28.9 | 25.7 | 26 | 0.43 | 26.2 |
| Production Example 6 | 400 | 0.04 | (6) | 96 | - | 29.4 | 25.9 | 26 | 0.41 | 26.3 |
| Production Example 7 | 1000 | 0.04 | (7) | 97 | - | 29.3 | 26.0 | 27 | 0.42 | 26.4 |
| Production Example 8 | 2000 | 0.04 | (8) | 99 | - | 29.5 | 25.7 | 25 | 0.40 | 26.1 |
| Production Example 9 | 600 | 0.04 | (9) | 95 | - | 29.5 | 26.0 | 25 | 0.43 | 26.4 |
| Production Example 10 | - | - | (10) | - | 91 | 35.1 | 22.4 | - | 0.25 | 23.0 |
| Production Example 11 | 600 | 0.04 | (11) | - | 70 | 34.6 | 22.4 | - | 0.26 | 22.9 |
| Production Example 12 | 600 | 0.30 | (12) | - | 97 | 36.9 | 20.3 | - | 0.24 | 19.7 |
| Production Example 13 | 600 | 0.02 | (13) | 98 | - | 29.3 | 25.9 | 27 | 0.40 | 26.3 |
| Production Example 14 | 600 | 0.20 | (14) | 85 | - | 29.0 | 25.8 | 27 | 0.44 | 26.1 |

[*1]: Addition amount of monomer contained in monomer aqueous solution with respect to total mass
[*2]: [× 10⁻⁷·cm³·sec/g]

Comparative Example 1

In a plastic container having a capacity of 200 mL (inner diameter: 70 mm, depth: 140 mm), 40 g of the water-absorbent resin (1) after surface crosslinking obtained in Production Example 1 was put after the temperature was adjusted to 24°C. Subsequently, using a three-one motor equipped with an anchor type stirring blade (diameter: 57 mm, height: 70 mm) made of a metal rod having a diameter of 3 mm, an aqueous solution at a liquid temperature of 25°C composed of 0.17 parts by mass of deionized water and 0.08 parts by mass of polyethylene glycol 600 (mass-average molecular weight: 600, available from FUJIFILM Wako Pure Chemical Corporation) was added to 100 parts by mass of the water-absorbent resin (1) after surface crosslinking in the plastic container using a straight pipe having an inner diameter of 0.5 mm, while stirring the water-absorbent resin (1) after surface crosslinking at a rotation speed of 450 rpm. The obtained mixture was stacked in the form of a layer having a thickness of 5 cm, and allowed to stand for 30 minutes in a ventilation type hot-air dryer in which the atmospheric temperature was set to 60°C to be cured. The mixture subjected to the curing treatment was passed through a wire mesh having a mesh size of 850 $\mu$m to obtain a particulate water-absorbing agent composition (C1). The addition amount of polyethylene glycol 600 was 0.08 mass% with respect to the water-absorbent resin (1) after surface crosslinking. Various physical properties of the obtained particulate water-absorbing agent composition (C1) are shown in Table 2.

Comparative Example 2

A particulate water-absorbing agent composition (C2) was obtained by performing the same operations as those of Comparative Example 1 except that the aqueous solution to be added was changed to an aqueous solution composed of 0.34 parts by mass of deionized water and 0.16 parts by mass of polyethylene glycol 600 (mass-average molecular weight: 600, available from FUJIFILM Wako Pure Chemical Corporation) and having a liquid temperature of 25°C in Comparative Example 1. The addition amount of polyethylene glycol 600 was 0.16 mass% with respect to the water-absorbent resin (1) after surface crosslinking. Various physical properties of the obtained particulate water-absorbing agent composition (C2) are shown in Table 2.

Comparative Example 3

A particulate water-absorbing agent composition (C3) was obtained by performing the same operations as those of Comparative Example 1 except that the aqueous solution to be added was changed to a mixed solution composed of 0.604 parts by mass of a 27 mass% aluminum sulfate aqueous solution (8 mass% in terms of aluminum oxide), 0.181 parts by mass of a 60 mass% sodium lactate aqueous solution, and 0.015 parts by mass of propylene glycol at a liquid temperature of 25°C in Comparative Example 1. Various physical properties of the obtained particulate water-absorbing agent composition (C3) are shown in Table 2.

Comparative Example 4

A particulate water-absorbing agent composition (C4) was obtained by performing the same operations as those of Comparative Example 2 except that the water-absorbent resin after surface crosslinking to be used in Comparative Example 2 was changed to the water-absorbent resin (2) after surface crosslinking obtained in Production Example 2. The addition amount of polyethylene glycol 600 was 0.16 mass% with respect to the water-absorbent resin (2) after surface crosslinking. Various physical properties of the obtained particulate water-absorbing agent composition (C4) are shown in Table 2.

Comparative Example 5

A particulate water-absorbing agent composition (C5) was obtained by performing the same operations as those of Comparative Example 2 except that the water-absorbent resin after surface crosslinking used in Comparative Example 2 was changed to the water-absorbent resin (3) after surface crosslinking obtained in Production Example 3. The addition amount of polyethylene glycol 600 was 0.16 mass% with respect to the water-absorbent resin (3) after surface crosslinking. Various physical properties of the obtained particulate water-absorbing agent composition (C5) are shown in Table 2.

Comparative Example 6

A particulate water-absorbing agent composition (C6) was obtained by performing the same operations as those of Comparative Example 1 except that the water-absorbent resin after surface crosslinking used in Comparative Example 1 was changed to the water-absorbent resin (4) after surface crosslinking obtained in Production Example 4, and the aqueous solution to be added was changed to an aqueous solution composed of 0.34 parts by mass of deionized water and 0.16 parts by mass of polyethylene glycol 200 (mass-average molecular weight: 200, available from FUJIFILM Wako Pure Chemical Corporation) and having a liquid temperature of 25°C. The addition amount of polyethylene glycol 200 was 0.16 mass% with respect to the water-absorbent resin (4) after surface crosslinking. Various physical properties of the obtained particulate water-absorbing agent composition (C6) are shown in Table 2.

Example 1

A particulate water-absorbing agent composition (1) was obtained by performing the same operations as those of Comparative Example 6 except that the aqueous solution to be added was changed to an aqueous solution composed of 0.70 parts by mass of deionized water and 0.30 parts by mass of polyethylene glycol 400 (mass-average molecular weight: 400, available from FUJIFILM Wako Pure Chemical Corporation) and having a liquid temperature of 25°C in Comparative Example 6. The addition amount of polyethylene glycol 400 was 0.30 mass% with respect to the water-absorbent resin (4) after surface crosslinking. Various physical properties of the obtained particulate water-absorbing agent composition (1) are shown in Table 2 and Table 3.

Example 2

A particulate water-absorbing agent composition (2) was obtained by performing the same operations as those of Example 1 except that the aqueous solution added in Example 1 was changed to the aqueous solution composed of 0.17 parts by mass of deionized water and 0.08 parts by mass of polyethylene glycol 600 (mass-average molecular weight: 600, available from FUJIFILM Wako Pure Chemical Corporation) used in Comparative Example 1 having a liquid temperature of 25°C. The addition amount of polyethylene glycol 600 was 0.08 mass% with respect to the water-absorbent resin (4) after surface crosslinking. Various physical properties of the obtained particulate water-absorbing agent composition (2) are shown in Table 2 and Table 3.

Example 3

A particulate water-absorbing agent composition (3) was obtained by performing the same operations as those of Example 1 except that the aqueous solution added in Example 1 was changed to the aqueous solution composed of 0.34 parts by mass of deionized water and 0.16 parts by mass of polyethylene glycol 600 (mass-average molecular weight: 600, available from FUJIFILM Wako Pure Chemical Corporation) used in Comparative Example 2 having a liquid temperature of 25°C. The addition amount of polyethylene glycol 600 was 0.16 mass% with respect to the water-absorbent resin (4) after surface crosslinking. Various physical properties of the obtained particulate water-absorbing agent composition (3) are shown in Table 2 and Table 3.

Example 4

A particulate water-absorbing agent composition (4) was obtained by performing the same operations as those of Example 1 except that the polyethylene glycol used in the aqueous solution added in Example 1 was changed to polyethylene glycol 600 (mass-average molecular weight: 600, available from FUJIFILM Wako Pure Chemical Corporation). The addition amount of polyethylene glycol 600 was 0.30 mass% with respect to the water-absorbent resin (4) after surface crosslinking. Various physical properties of the obtained particulate water-absorbing agent composition (4) are shown in Table 2 and Table 3.

Example 5

A particulate water-absorbing agent composition (5) was obtained by performing the same operations as those of Example 1 except that the polyethylene glycol used in the aqueous solution added in Example 1 was changed to polyethylene glycol 1000 (mass-average molecular weight: 1000, available from FUJIFILM Wako Pure Chemical Corporation). The addition amount of polyethylene glycol 1000 was 0.30 mass% with respect to the water-absorbent resin (4) after surface crosslinking. Various physical properties of the obtained particulate water-absorbing agent composition (5) are shown in Table 2 and Table 3.

Example 6

A particulate water-absorbing agent composition (6) was obtained by performing the same operations as those of Example 1 except that the polyethylene glycol used in the aqueous solution added in Example 1 was changed to polyethylene glycol 2000 (mass-average molecular weight: 2000, available from FUJIFILM Wako Pure Chemical Corporation). The addition amount of polyethylene glycol 2000 was 0.30 mass% with respect to the water-absorbent resin (4) after surface crosslinking. Various physical properties of the obtained particulate water-absorbing agent composition (6) are shown in Table 2 and Table 3.

Example 7

A particulate water-absorbing agent composition (7) was obtained by performing the same operations as those of Example 1 except that the polyethylene glycol used in the aqueous solution added in Example 1 was changed to polyethylene glycol 10000 (mass-average molecular weight: 10000, available from FUJIFILM Wako Pure Chemical Corporation). The addition amount of polyethylene glycol 10000 was 0.30 mass% with respect to the water-absorbent resin (4) after surface crosslinking. Various physical properties of the obtained particulate water-absorbing agent composition (7) are shown in Table 2 and Table 3.

Comparative Example 7

A particulate water-absorbing agent composition (C7) was obtained by performing the same operations as those of Comparative Example 6 except that the polyethylene glycol used in the aqueous solution added in Comparative Example 6 was changed to polyethylene glycol 20000 (mass-average molecular weight: 20000, available from FUJIFILM Wako Pure Chemical Corporation). The addition amount of polyethylene glycol 20000 was 0.16 mass% with respect to the water-absorbent resin (4) after surface crosslinking. Various physical properties of the obtained particulate water-absorbing agent composition (C7) are shown in Table 2.

Example 8

A particulate water-absorbing agent composition (8) was obtained by performing the same operations as those of Example 1 except that the aqueous solution added in Example 1 was changed to a mixed solution composed of 0.70 parts by mass of isopropyl alcohol and 0.30 parts by mass of polypropylene glycol 700 (mass-average molecular weight: 700, available from FUJIFILM Wako Pure Chemical Corporation) and having a liquid temperature of 25°C. The addition amount of polypropylene glycol 700 was 0.30 mass% with respect to the water-absorbent resin (4) after surface crosslinking. Various physical properties of the obtained particulate water-absorbing agent composition (8) are shown in Table 2 and Table 3.

Example 9

A particulate water-absorbing agent composition (9) was obtained by performing the same operations as those of Example 8 except that the polypropylene glycol used in the aqueous solution added in Example 8 was changed to polypropylene glycol 1000 (mass-average molecular weight: 1000, available from FUJIFILM Wako Pure Chemical Corporation). The addition amount of polypropylene glycol 1000 was 0.30 mass% with respect to the water-absorbent resin (4) after surface crosslinking. Various physical properties of the obtained particulate water-absorbing agent composition (9) are shown in Table 2 and Table 3.

Example 10

A particulate water-absorbing agent composition (10) was obtained by performing the same operations as those of Example 1 except that the aqueous solution added in Example 1 was changed to a mixed solution composed of 0.76 parts by mass of isopropyl alcohol and 0.04 parts by mass of polyoxyethylene (20) sorbitan monostearate (available from Kao Corporation) having a liquid temperature of 25°C. The addition amount of polyoxyethylene (20) sorbitan monostearate was 0.04 mass% with respect to the water-absorbent resin (4) after surface crosslinking. Various physical properties of the obtained particulate water-absorbing agent composition (10) are shown in Table 2 and Table 3.

Example 11

A particulate water-absorbing agent composition (11) was obtained by performing the same operations as those of Example 10 except that the nonionic polymer used in the aqueous solution added in Example 10 was changed to polyoxyethylene (20) sorbitan tristearate (available from Kao Corporation). The addition amount of polyoxyethylene (20) sorbitan tristearate was 0.04 mass% with respect to the water-absorbent resin (4) after surface crosslinking. Various physical properties of the obtained particulate water-absorbing agent composition (11) are shown in Table 2 and Table 3.

Comparative Example 8

A particulate water-absorbing agent composition (C8) was obtained by performing the same operations as those of Example 10 except that the nonionic polymer used in the aqueous solution added in Example 10 was changed to sorbitan monooleate (available from Kao Corporation). Various physical properties of the obtained particulate water-absorbing agent composition (C8) are shown in Table 2.

Comparative Example 9

A particulate water-absorbing agent composition (C9) was obtained by performing the same operations as those of Example 1 except that the aqueous solution added in Example 1 was changed to the mixed solution composed of 0.604 parts by mass of a 27 mass% aluminum sulfate aqueous solution (8 mass% in terms of aluminum oxide), 0.181 parts by mass of a 60 mass% sodium lactate aqueous solution, and 0.015 parts by mass of propylene glycol used in Comparative Example 3 having a liquid temperature of 25°C. Various physical properties of the obtained particulate water-absorbing agent composition (C9) are shown in Table 2.

Comparative Example 10

To 100 parts by mass of the water-absorbent resin (4) after surface crosslinking obtained in Production Example 4, 0.10 parts by mass of fumed silica (AEROSIL 200, available from NIPPON AEROSIL CO., LTD.) was mixed to obtain a particulate water-absorbing agent composition (C10). In the mixing, 30 g of the water-absorbent resin (4) after surface crosslinking was temperature-controlled to 24°C, then put in a 225 mL volume mayonnaise bottle together with fumed silica, and shaken for 3 minutes using a paint shaker. Various physical properties of the obtained particulate water-absorbing agent composition (C10) are shown in Table 2.

Comparative Example 11

A particulate water-absorbing agent composition (C11) was obtained by performing the same operations as those of Comparative Example 10 except that the addition amount of the fumed silica (AEROSIL 200, available from NIPPON AEROSIL CO., LTD.) used in Comparative Example 10 was changed to 0.20 parts by mass. Various physical properties of the obtained particulate water-absorbing agent composition (C11) are shown in Table 2.

Example 12

A particulate water-absorbing agent composition (12) was obtained by performing the same operations as those of Comparative Example 2 except that the water-absorbent resin after surface crosslinking used in Comparative Example 2 was changed to the water-absorbent resin (5) after surface crosslinking obtained in Production Example 5. The addition amount of polyethylene glycol 600 was 0.16 mass% with respect to the water-absorbent resin (5) after surface crosslinking. Various physical properties of the obtained particulate water-absorbing agent composition (12) are shown in Table 2 and Table 3.

Example 13

A particulate water-absorbing agent composition (13) was obtained by performing the same operations as those of Comparative Example 2 except that the water-absorbent resin after surface crosslinking used in Comparative Example 2 was changed to the water-absorbent resin (6) after surface crosslinking obtained in Production Example 6. The addition amount of polyethylene glycol 600 was 0.16 mass% with respect to the water-absorbent resin (6) after surface crosslinking. Various physical properties of the obtained particulate water-absorbing agent composition (13) are shown in Table 2 and Table 3.

Example 14

A particulate water-absorbing agent composition (14) was obtained by performing the same operations as those of Comparative Example 2 except that the water-absorbent resin after surface crosslinking used in Comparative Example 2 was changed to the water-absorbent resin (7) after surface crosslinking obtained in Production Example 7. The addition amount of polyethylene glycol 600 was 0.16 mass% with respect to the water-absorbent resin (7) after surface crosslinking. Various physical properties of the obtained particulate water-absorbing agent composition (14) are shown in Table 2 and Table 3.

Example 15

A particulate water-absorbing agent composition (15) was obtained by performing the same operations as those of Comparative Example 2 except that the water-absorbent resin after surface crosslinking used in Comparative Example 2 was changed to the water-absorbent resin (8) after surface crosslinking obtained in Production Example 8. The addition amount of polyethylene glycol 600 was 0.16 mass% with respect to the water-absorbent resin (8) after surface crosslinking. Various physical properties of the obtained particulate water-absorbing agent composition (15) are shown in Table 2 and Table 3.

Example 16

A particulate water-absorbing agent composition (16) was obtained by performing the same operations as those of Comparative Example 2 except that the water-absorbent resin after surface crosslinking used in Comparative Example 2 was changed to the water-absorbent resin (9) after surface crosslinking obtained in Production Example 9. The addition amount of polyethylene glycol 600 was 0.16 mass% with respect to the water-absorbent resin (9) after surface crosslinking. Various physical properties of the obtained particulate water-absorbing agent composition (16) are shown in Table 2 and Table 3.

Comparative Example 12

A particulate water-absorbing agent composition (C12) was obtained by performing the same operations as those of Comparative Example 1 except that the water-absorbent resin after surface crosslinking used in Comparative Example 1 was changed to the water-absorbent resin (10) after surface crosslinking obtained in Production Example 10, and the aqueous solution to be added was changed to an aqueous solution containing 0.35 parts by mass of deionized water and 0.15 parts by mass of polyethylene glycol 600 (mass-average molecular weight: 600, available from FUJIFILM Wako Pure Chemical Corporation) having a liquid temperature of 25°C. The addition amount of polyethylene glycol 600 was 0.15 mass% with respect to the water-absorbent resin (10) after surface crosslinking. Various physical properties of the obtained particulate water-absorbing agent composition (C12) are shown in Table 2.

Example 17

A particulate water-absorbing agent composition (17) was obtained by performing the same operations as those of Comparative Example 12 except that the water-absorbent resin after surface crosslinking used in Comparative Example 12 was changed to the water-absorbent resin (11) after surface crosslinking obtained in Production Example 11. The addition amount of polyethylene glycol 600 was 0.15 mass% with respect to the water-absorbent resin (11) after surface crosslinking. Various physical properties of the obtained particulate water-absorbing agent composition (17) are shown in Table 2 and Table 3.

Example 18

A particulate water-absorbing agent composition (18) was obtained by the same operation as in Example 1 except that the water-absorbent resin after surface crosslinking used in Example 1 was changed to the water-absorbent resin after surface crosslinking (13) obtained in Production Example 13, and the aqueous solution to be added was changed to a mixed solution composed of 0.48 parts by mass of isopropyl alcohol and 0.025 parts by mass of polyoxyethylene (20) sorbitan monostearate (available from Kao Corporation) having a liquid temperature of 25°C. The addition amount of polyoxyethylene (20) sorbitan monostearate was 0.025 mass% with respect to the water-absorbent resin (13) after surface crosslinking. Various physical properties of the obtained particulate water-absorbing agent composition (18) are shown in Table 2 and Table 3.

Example 19

A particulate water-absorbing agent composition (19) was obtained by performing the same operations as those of Example 1 except that the water-absorbent resin after surface crosslinking used in Example 1 was changed to the water-absorbent resin (14) after surface crosslinking obtained in Production Example 14, and the aqueous solution to be added was changed to an aqueous solution composed of 0.82 parts by mass of deionized water and 0.35 parts by mass of polyethylene glycol 600 (mass-average molecular weight: 600, available from FUJIFILM Wako Pure Chemical Corporation) having a liquid temperature of 25°C. The addition amount of polyethylene glycol 600 was 0.35 mass% with respect to the water-absorbent resin (14) after surface crosslinking. Various physical properties of the obtained particulate water-absorbing agent composition (19) are shown in Table 2 and Table 3.

| | Water-absorbent resin after surface crosslinking | Nonionic polymer | | Particulate water-absorbing agent composition | | | | | | | | | | | |
| | | Nonionic polymer used | Addition Amount [mass%*1] | Name | Physical properties | | | | | | | | | | |
| | | | | Particulate water-absorbing agent composition | B.R.<1> [mass%] | B.R.<2> [mass%] | ΔB.R. [mass%] | CRC [g/g] | AAP0.7 [g/g] | SFC [*2] | FSR [g/(g·s)] | FHA [g/g] | Surface tension [mN/m] | Solid content [mass%] |
|---|---|---|---|---|---|---|---|---|---|---|---|---|---|---|
| Comparative Example 1 | (1) | Polyethylene glycol 600 | 0.08 | (C1) | 95 | - | 4 | 28.6 | 25.6 | 25 | 0.39 | 25.7 | - | - |
| Comparative Example 2 | (1) | Polyethylene glycol 600 | 0.16 | (C2) | 83 | - | 16 | 28.9 | 25.4 | 28 | 0.37 | 25.9 | - | - |
| Comparative Example 3 | (1) | Mixed solution containing aluminum sulfate | 0.80 | (C3) | 23 | - | 76 | 29.0 | 24.4 | 35 | 0.43 | 24.5 | - | - |
| Comparative Example 4 | (2) | Polyethylene glycol 600 | 0.16 | (C4) | 85 | - | 14 | 29.0 | 25.4 | 28 | 0.37 | 26.0 | - | - |
| Comparative Example 5 | (3) | Polyethylene glycol 600 | 0.16 | (C5) | 88 | - | 11 | 28.8 | 25.0 | 28 | 0.40 | 25.8 | - | - |
| Comparative Example 6 | (4) | Polyethylene glycol 200 | 0.16 | (C6) | 98 | - | 0 | 29.2 | 25.8 | 22 | 0.38 | 26.3 | - | - |
| Example 1 | (4) | Polyethylene glycol 400 | 0.30 | (1) | 52 | - | 46 | 29.1 | 25.7 | 21 | 0.39 | 26.3 | 70 | 97.6 |
| Example 2 | (4) | Polyethylene glycol 600 | 0.08 | (2) | 74 | - | 24 | 29.1 | 25.9 | 23 | 0.38 | 26.1 | 70 | 98.0 |
| Example 3 | (4) | Polyethylene glycol 600 | 0.16 | (3) | 60 | - | 38 | 29.2 | 26.0 | 24 | 0.41 | 26.2 | 69 | 97.9 |
| Example 4 | (4) | Polyethylene glycol 600 | 0.30 | (4) | 41 | - | 57 | 29.3 | 25.7 | 22 | 0.38 | 26.0 | 66 | 97.6 |
| Example 5 | (4) | Polyethylene glycol 1000 | 0.30 | (5) | 47 | - | 51 | 29.3 | 25.7 | 22 | 0.39 | 26.3 | 65 | 97.6 |
| Example 6 | (4) | Polyethylene glycol 2000 | 0.30 | (6) | 61 | - | 37 | 29.3 | 25.7 | 23 | 0.40 | 26.2 | 64 | 97.5 |

| | Water-absorbent resin after surface crosslinking | Nonionic polymer | | Particulate water-absorbing agent composition | | | | | | | | | | | |
|---|---|---|---|---|---|---|---|---|---|---|---|---|---|---|---|
| | | Nonionic polymer used | Addition Amount [mass%*1] | Name Particulate water-absorbing agent composition | Physical properties | | | | | | | | | | |
| | | | | | B.R.<1> [mass%] | B.R.<2> [mass%] | ΔB.R. [mass%] | CRC [g/g] | AAP0.7 [g/g] | SFC [*2] | FSR [g/(g·s)] | FHA [g/g] | Surface tension [mN/m] | Solid content [mass%] |
| Example 7 | (4) | Polyethylene glycol 10000 | 0.30 | (7) | 77 | - | 21 | 29.6 | 25.6 | 24 | 0.38 | 26.1 | 62 | 97.5 |
| Comparative Example 7 | (4) | Polyethylene glycol 20000 | 0.16 | (C7) | 92 | - | 6 | 29.5 | 25.8 | 24 | 0.37 | 26.0 | - | - |
| Example 8 | (4) | Polypropylene glycol 700 | 0.30 | (8) | 45 | - | 53 | 29.4 | 25.6 | 20 | 0.40 | 25.8 | 55 | 97.7 |
| Example 9 | (4) | Polypropylene glycol 1000 | 0.30 | (9) | 54 | - | 44 | 29.5 | 25.7 | 19 | 0.39 | 25.5 | 49 | 97.7 |
| Example 10 | (4) | Polyoxyethylene (20) sorbitan monostearate | 0.04 | (10) | 45 | - | 53 | 29.4 | 25.8 | 22 | 0.39 | 25.6 | 52 | 97.6 |
| Example 11 | (4) | Polyoxyethylene (20) sorbitan tristearate | 0.04 | (11) | 62 | - | 36 | 29.4 | 25.6 | 23 | 0.40 | 25.3 | 48 | 97.7 |
| Comparative Example 8 | (4) | Sorbitan monooleate | 0.04 | (C8) | 67 | - | 31 | 29.4 | 25.6 | 22 | 0.41 | 19.0 | - | - |
| Comparative Example 9 | (4) | Mixed solution containing aluminum sulfate | 0.80 | (C9) | 1 | - | 97 | 29.9 | 24.7 | 33 | 0.44 | 25.1 | - | - |
| Comparative Example 10 | (4) | Fumed silica | 0.10 | (C10) | 65 | - | 33 | 29.7 | 22.6 | 23 | 0.44 | 22.5 | - | - |
| Comparative Example 11 | (4) | Fumed silica | 0.20 | (C11) | 23 | - | 75 | 29.4 | 21.5 | 26 | 0.47 | 21.6 | - | - |
| Example 12 | (5) | Polyethylene glycol 600 | 0.16 | (12) | 55 | - | 33 | 28.7 | 25.5 | 25 | 0.42 | 26.0 | 68 | 98.1 |

(continued)

| | Water-absorbent resin after surface crosslinking | Nonionic polymer | | Particulate water-absorbing agent composition | | | | | | | | | | | |
| | | Nonionic polymer used | Addition Amount [mass%*1] | Name | Physical properties | | | | | | | | | | |
| | | | | Particulate water-absorbing agent composition | B.R.<1> [mass%] | B.R.<2> [mass%] | ΔB.R. [mass%] | CRC [g/g] | AAP0.7 [g/g] | SFC [*2] | FSR [g/(g·s)] | FHA [g/g] | Surface tension [mN/m] | Solid content [mass%] |
| Example 13 | (6) | Polyethylene glycol 600 | 0.16 | (13) | 62 | - | 34 | 29.2 | 25.8 | 24 | 0.41 | 26.2 | 69 | 97.9 |
| Example 14 | (7) | Polyethylene glycol 600 | 0.16 | (14) | 65 | - | 32 | 29.1 | 26.0 | 27 | 0.41 | 26.2 | 69 | 98.0 |
| Example 15 | (8) | Polyethylene glycol 600 | 0.16 | (15) | 68 | - | 31 | 29.3 | 25.5 | 24 | 0.41 | 26.0 | 68 | 98.1 |
| Example 16 | (9) | Polyethylene glycol 600 | 0.16 | (16) | 59 | - | 36 | 29.4 | 25.9 | 25 | 0.42 | 26.1 | 69 | 97.8 |
| Comparative Example 12 | (10) | Polyethylene glycol 600 | 0.15 | (C12) | - | 62 | 29 | 35.2 | 21.7 | - | 0.29 | 22.0 | - | - |
| Example 17 | (11) | Polyethylene glycol 600 | 0.15 | (17) | - | 29 | 41 | 34.9 | 21.6 | - | 0.26 | 22.0 | 69 | 97.9 |
| Example 18 | (13) | Polyoxvethylene (20) sorbitan monostearate | 0.025 | (18) | 53 | - | 45 | 29.3 | 25.7 | 26 | 0.39 | 25.8 | 55 | 97.9 |
| Example 19 | (14) | Polyethylene glycol 600 | 0.35 | (19) | 20 | - | 65 | 28.7 | 25.5 | 25 | 0.41 | 25.6 | 61 | 97.4 |

[*1]: Addition amount to water-absorbent resin after surface crosslinking
[*2]: [× $10^{-7}$·cm$^3$·sec/g]

[Table 3]

| | | Particulate water-absorbing agent composition | | | | | |
|---|---|---|---|---|---|---|---|
| | Name | Nonionic polymer | | | | | |
| | Particulate water-absorbing agent composition | A1 | C1 [mass%] | A2 | C2 [mass%] | C1-C2 [mass%] |
| Example 1 | (1) | PEG600/PEG400 | 0.32 | PEG600 | 0.02 | 0.30 |
| Example 2 | (2) | PEG600 | 0.10 | PEG600 | 0.02 | 0.08 |
| Example 3 | (3) | PEG600 | 0.18 | PEG600 | 0.02 | 0.16 |
| Example 4 | (4) | PEG600 | 0.32 | PEG600 | 0.02 | 0.30 |
| Example 5 | (5) | PEG600/PEG1000 | 0.32 | PEG600 | 0.02 | 0.30 |
| Example 6 | (6) | PEG600/PEG2000 | 0.32 | PEG600 | 0.02 | 0.30 |
| Example 7 | (7) | PEG600/PEG10000 | 0.32 | PEG600 | 0.02 | 0.30 |
| Example 8 | (8) | PEG600/PPG700 | 0.32 | PEG600 | 0.02 | 0.30 |
| Example 9 | (9) | PEG600/PPG1000 | 0.32 | PEG600 | 0.02 | 0.30 |
| Example 10 | (10) | PEG600/Tw | 0.06 | PEG600 | 0.02 | 0.04 |
| Example 11 | (11) | PEG600/Tw | 0.06 | PEG600 | 0.02 | 0.04 |
| Example 12 | (12) | PEG600 | 0.24 | PEG600 | 0.08 | 0.16 |
| Example 13 | (13) | PEG400/PEG600 | 0.18 | PEG400 | 0.02 | 0.16 |
| Example 14 | (14) | PEG1000/PEG600 | 0.18 | PEG1000 | 0.02 | 0.16 |
| Example 15 | (15) | PEG2000/PEG600 | 0.18 | PEG2000 | 0.02 | 0.16 |
| Example 16 | (16) | PEG600 | 0.18 | PEG600 | 0.02 | 0.16 |
| Example 17 | (17) | PEG600 | 0.17 | PEG600 | 0.02 | 0.15 |
| Example 18 | (18) | PEG600/Tw | 0.03 | PEG600 | 0.01 | 0.02 |
| Example 19 | (19) | PEG600 | 0.46 | PEG600 | 0.11 | 0.35 |

PEG: Polyethylene glycol
PPG: Polypropylene glycol
Tw: Polyoxyethylene (20) sorbitan monostearate

Summary

Comparative Examples 1 to 5 are examples in which a water-absorbent resin (water-absorbent resins (1) to (3) after surface crosslinking) produced without adding a water-soluble polyalkylene glycol was used in any of the monomer aqueous solution preparation step, the polymerization step, or the hydrogel grinding step.

Comparison between Comparative Example 1 and Example 2 in which the same 0.08 mass% of polyethylene glycol 600 was added to the water-absorbent resins (1) and (4) after surface crosslinking shows that the particulate water-absorbing agent composition (2) of Example 2 using the water-absorbent resin (4) after surface crosslinking produced by adding a water-soluble polyalkylene glycol before the hydrogel grinding step has a larger ΔB. R. than the particulate water-absorbing agent composition (C1) of Comparative Example 1, and the effect of improving caking resistance performance is significantly enhanced. In addition, in the particulate water-absorbing agent composition (2), AAP and FHA are hardly deteriorated.

Similarly, comparison between Comparative Examples 2, 4, and 5, Example 3, and Example 16 in which the same 0.16 mass% of polyethylene glycol 600 was added to the water-absorbent resins (1), (2), (3), (4), and (9) after surface crosslinking shows that the particulate water-absorbing agent compositions (3) and (16) of Examples 3 and 16 using the water-absorbent resins (4) and (9) after surface crosslinking produced by adding a water-soluble polyalkylene glycol before the hydrogel grinding step have a larger ΔB. R. and a significantly enhanced caking resistance performance as compared with the particulate water-absorbing agent compositions (C2), (C4), and (C5) of Comparative Examples 2, 4, and 5. In addition, in the particulate water-absorbing agent compositions (3) and (16), AAP and FHA are not deteriorated.

On the other hand, the particulate water-absorbing agent composition (C3) of Comparative Example 3 in which aluminum sulfate was added to the same water-absorbent resin (1) after surface crosslinking as in Comparative Examples 1 and 2 had a large ∆B. R., and the effect of improving caking resistance performance was good, but AAP 0.7 and FHA deteriorated, indicating that the particulate water-absorbing agent composition (C3) was poor in water-absorbing performance under pressure.

Further, comparison between Examples 1 to 7 and Comparative Examples 6 and 7 in which the same water-absorbent resin (4) after surface crosslinking was used, and the molecular weight (mass-average molecular weight) of polyethylene glycol as a nonionic polymer added thereto was changed shows that the particulate water-absorbing agent compositions (C6) and (C7) of Comparative Examples 6 and 7 in which the mass-average molecular weights of the nonionic polymers were 200 and 20000 have small ∆B. R., and have a low effect of improving caking resistance performance.

From Examples 1 to 11 and Comparative Example 8 in which the same water-absorbent resin (4) after surface crosslinking was used and the added nonionic polymer was changed, it can be seen that FHA of the particulate water-absorbing agent composition (C8) of Comparative Example 8 in which the nonionic polymer not containing a polyalkylene glycol chain in the structure was added was significantly deteriorated.

From Comparative Examples 9 to 11, it can be seen that even when the water-absorbent resin (4) after surface crosslinking produced by adding a water-soluble polyalkylene glycol before the hydrogel grinding step is used, AAP and FHA deteriorate when silica or an aluminum salt is added.

It can be seen that also in the particulate water-absorbing agent composition (12) of Example 12 in which 0.16 mass% of polyethylene glycol 600 is added in the same manner as in Example 3 using the water-absorbent resin (5) after surface crosslinking produced by changing the amount of the water-soluble polyalkylene glycol added before the hydrogel grinding step to 0.14 mass% with respect to the total mass of the monomers, ∆B. R. is large, and the effect of improving caking resistance performance is significantly enhanced. In addition, in the particulate water-absorbing agent composition (12), AAP and FHA are not deteriorated.

It can be seen that also in the particulate water-absorbing agent compositions (13), (14), and (15) of Examples 13, 14, and 15 in which 0.16 mass% of polyethylene glycol 600 is added in the same manner as in Example 3 using the water-absorbent resins (6), (7), and (8) after surface crosslinking produced by respectively changing the molecular weight (mass-average molecular weight) of the water-soluble polyalkylene glycol added before the hydrogel grinding step to 400, 1000, and 2000, ∆B. R. is large, and the effect of improving caking resistance performance is significantly enhanced. In addition, in the particulate water-absorbing agent compositions (13), (14), and (15), AAP and FHA are not deteriorated.

Comparative Examples 12 and 17 are examples in which the addition amount of polyethylene glycol diacrylate (average molecular weight: 523) in the monomer aqueous solution adjustment step was reduced, and CRC of the water-absorbent resin after surface crosslinking was increased, as compared with other Examples and Comparative Examples.

Comparison between Comparative Example 12 in which 0.15 mass% of polyethylene glycol 600 was added to the water-absorbent resin (10) after surface crosslinking and Example 17 in which the same 0.15 mass% of polyethylene glycol 600 was added to the water-absorbent resin (11) after surface crosslinking shows that the particulate water-absorbing agent composition (17) of Example 17 using the water-absorbent resin (11) after surface crosslinking produced by adding a water-soluble polyalkylene glycol before the hydrogel grinding step has a larger ∆B. R., and the effect of improving caking resistance performance is significantly enhanced, as compared with the particulate water-absorbing agent composition (C12) of Comparative Example 12. That is, it is found that, even in the example in which CRC of the water-absorbent resin after surface crosslinking is increased, the effect of improving caking resistance performance with the nonionic polymer added to the water-absorbent resin after surface crosslinking is significantly enhanced by adding the water-soluble polyalkylene glycol before the hydrogel grinding step. In addition, in the particulate water-absorbing agent composition (17), AAP and FHA are hardly deteriorated as compared with the water-absorbent resin (11) after surface crosslinking before addition of polyethylene glycol 600.

On the other hand, in the water-absorbent resin (12) after surface crosslinking in which the amount of the water-soluble polyalkylene glycol added before the hydrogel grinding step was 0.30 mass% with respect to the total mass of the monomers contained in the monomer aqueous solution, B. R. was larger than that of the water-absorbent resin (10) after surface crosslinking in which the water-soluble polyalkylene glycol was not added before the hydrogel grinding step, that is, the caking resistance performance was deteriorated. That is, it is found that when the amount of the water-soluble polyalkylene glycol added before the hydrogel grinding step is 0.30 mass% or more, B. R. is deteriorated, which is not preferable from the viewpoint of improving caking resistance performance.

Industrial Applicability

The method for producing a particulate water-absorbing agent composition according to the present invention can provide a particulate water-absorbing agent composition having high caking resistance performance without deteriorating water-absorbing performance under pressure. Thus, the particulate water-absorbing agent composition obtained by the present invention can be suitably used for absorbent articles such as disposable diapers, sanitary napkins, and incontinence pads.

**Claims**

1. A method for producing a particulate water-absorbing agent composition including a poly(meth)acrylic acid (salt)-based water-absorbent resin, the method comprising:

a monomer aqueous solution preparation step of preparing a (meth)acrylic acid (salt)-based monomer aqueous solution;
a polymerization step of polymerizing the (meth)acrylic acid (salt)-based monomer aqueous solution;
as an optional step, a hydrogel grinding step of subjecting a resulting crosslinked hydrogel polymer to gel grinding during polymerization or after polymerization;
a drying step of drying a particulate hydrogel;
as optional steps, a pulverizing step and a classification step of pulverizing and classifying a dried polymer; and
a surface crosslinking step of performing surface crosslinking on a water-absorbent resin before surface crosslinking,
wherein
the particulate hydrogel is obtained through the polymerization step or both the polymerization step and the hydrogel grinding step,
the dried polymer is obtained through the drying step,
the water-absorbent resin before surface crosslinking is the dried polymer or a water-absorbent resin obtained by pulverizing and/or classifying the dried polymer,
at least one step selected from the monomer aqueous solution preparation step, the polymerization step, and the optional hydrogel grinding step includes adding a water-soluble polyalkylene glycol having a mass-average molecular weight of 3000 or less in an amount of from 0.01 mass% to 0.25 mass% with respect to a total mass of monomers contained in the (meth)acrylic acid (salt)-based monomer aqueous solution, and
after the surface crosslinking step, a nonionic polymer having a polyalkylene glycol chain in a structure thereof and having a mass-average molecular weight of from 300 to 15000 is added in an amount of from 0.02 mass% to 0.40 mass% with respect to the water-absorbent resin that has been surface-crosslinked.

2. The production method according to claim 1, wherein the particulate water-absorbing agent composition has a surface tension of 45 mN/m or more.

3. The production method according to claim 1, wherein the particulate water-absorbing agent composition has an absorption against pressure (AAP) of 20 g/g or more under pressure of 0.7 psi.

4. The production method according to claim 1, wherein the particulate water-absorbing agent composition has a fixed height absorption (FHA) at a height of 20 cm of 20 g/g or more.

5. A particulate water-absorbing agent composition comprising a poly(meth)acrylic acid (salt)-based water-absorbent resin as a main component and a nonionic polymer having a polyalkylene glycol chain in a structure, the particulate water-absorbing agent composition having a mass proportion of particles having a particle diameter of 300 $\mu$m or more and less than 850 $\mu$m of 50 mass% or more,
the particulate water-absorbing agent composition satisfying all of (1) to (4) shown below when:

(a) the nonionic polymer contained in the particulate water-absorbing agent composition is defined as A1, and a content of the nonionic polymer is defined as C1;
(b) the particulate water-absorbing agent composition is subjected to a predetermined impact test;
(c) the particulate water-absorbing agent composition that has been subjected to the impact test is sieved into a particle group a having a particle diameter of 300 $\mu$m or more and a particle group b having a particle diameter of less than 300 $\mu$m with a JIS standard sieve; and
(d) the nonionic polymer present in the particle group a is defined as A2, and a content of the nonionic polymer is defined as C2:

(1) A1 is a water-soluble polyalkylene glycol having a mass-average molecular weight of 3000 or less and a nonionic polymer having a polyalkylene glycol chain in the structure and having a mass-average molecular weight from 300 to 15000;
(2) A2 is a water-soluble polyalkylene glycol having a mass-average molecular weight of 3000 or less;
(3) C2 is 0.005 mass% or more and 0.15 mass% or less; and
(4) C1 - C2 is 0.02 mass% or more and 0.40 mass% or less.

6. The particulate water-absorbing agent composition according to claim 5, the particulate water-absorbing agent composition having a surface tension of 45 mN/m or more.

7. The particulate water-absorbing agent composition according to claim 5, the particulate water-absorbing agent composition having an absorption against pressure (AAP) of 20 g/g or more under pressure of 0.7 psi.

8. The particulate water-absorbing agent composition according to claim 5, the particulate water-absorbing agent composition having a fixed height absorption (FHA) at a height of 20 cm of 20 g/g or more.

9. The particulate water-absorbing agent composition according to claim 5, the particulate water-absorbing agent composition having a CRC of 25 g/g or more.

10. The particulate water-absorbing agent composition according to claim 5, the particulate water-absorbing agent composition having a moisture absorption blocking ratio <1> (B. R. <1>) of 80 mass% or less.

11. The particulate water-absorbing agent composition according to claim 5, the particulate water-absorbing agent composition having a mass-average particle diameter (D50) of 300 $\mu$m or more and 600 $\mu$m or less.

12. The particulate water-absorbing agent composition according to claim 5, wherein a mass proportion of particles having a particle diameter of 850 $\mu$m or more in the particulate water-absorbing agent composition is 3 mass% or less, and a mass proportion of particles having a particle diameter less than 150 $\mu$m is 5 mass% or less.

13. An absorbent article comprising a particulate water-absorbing agent composition, as the particulate water-absorbing agent composition, the absorbent article comprising the particulate water-absorbing agent composition described in any one of claims 5 to 12.

EP 4 741 446 A1

# INTERNATIONAL SEARCH REPORT

International application No.

**PCT/JP2024/024366**

## A. CLASSIFICATION OF SUBJECT MATTER

*C08J 3/12*(2006.01)i; *C08F 2/44*(2006.01)i; *C08F 8/00*(2006.01)i; *C08F 20/06*(2006.01)i
FI: C08J3/12 A CEY; C08F2/44 C; C08F20/06; C08F8/00

According to International Patent Classification (IPC) or to both national classification and IPC

## B. FIELDS SEARCHED

Minimum documentation searched (classification system followed by classification symbols)

C08J3/12; C08F2/44; C08F8/00; C08F20/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| A | WO 2012/133734 A1 (NIPPON SHOKUBAI CO., LTD.) 04 October 2012 (2012-10-04) claims, examples | 1-13 |
| A | JP 2020-097731 A (SDP GLOBAL CO., LTD.) 25 June 2020 (2020-06-25) claims, examples | 1-13 |
| A | JP 2021-517603 A (LG CHEM, LTD.) 26 July 2021 (2021-07-26) claims, examples | 1-13 |
| A | WO 2022/131835 A1 (LG CHEM, LTD.) 23 June 2022 (2022-06-23) claims, examples | 1-13 |
| A | JP 2011-252080 A (SAN-DIA POLYMER LTD.) 15 December 2011 (2011-12-15) claims, examples | 1-13 |

☐ Further documents are listed in the continuation of Box C.   ☑ See patent family annex.

| | | |
|---|---|---|
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **13 September 2024** | **01 October 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/024366**

| Patent document cited in search report | | | Publication date (day/month/year) | Patent family member(s) | | | Publication date (day/month/year) |
|---|---|---|---|---|---|---|---|
| WO | 2012/133734 | A1 | 04 October 2012 | (Family: none) | | | |
| JP | 2020-097731 | A | 25 June 2020 | (Family: none) | | | |
| JP | 2021-517603 | A | 26 July 2021 | US | 2021/0009725 | A1 | |
| | | | | claims, examples | | | |
| | | | | WO | 2019/190120 | A1 | |
| | | | | EP | 3757153 | A1 | |
| | | | | KR | 10-2019-0114777 | A | |
| | | | | CN | 111902463 | A | |
| WO | 2022/131835 | A1 | 23 June 2022 | US | 2024/0018321 | A1 | |
| | | | | claims, examples | | | |
| | | | | JP | 2023-543307 | A | |
| | | | | EP | 4194486 | A1 | |
| | | | | KR | 10-2022-0088347 | A | |
| | | | | CN | 116234859 | A | |
| JP | 2011-252080 | A | 15 December 2011 | (Family: none) | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002523526 T
- JP 2001137704 A
- JP 59080459 A
- JP 2009510177 T
- JP 2000093792 A
- JP H11286611 A
- JP 2017509757 T
- JP 2004261796 A
- JP 2004512165 T
- WO 95033558 A
- JP 2003082250 A
- JP H06016822 A
- WO 2002005949 A
- JP 2003225565 A
- JP 2005095759 A
- WO 2008015980 A
- JP 2010521577 T
- JP H4255701 A
- WO 2007004529 A
- WO 2012023433 A

- US 4893999 A
- US 6906159 B
- US 7091253 B
- US 7741400 B
- US 8519212 B
- JP 2005036100 A
- US 6987151 B
- WO 2011126079 A
- WO 2009016055 A
- WO 2021140905 A
- WO 2006100300 A
- WO 2011025012 A
- WO 2011025013 A
- WO 2011111657 A
- US 7638570 B
- US 7183456 B
- JP H9235378 A
- US 20050003191 A
- US 5669894 A
- JP H9235378 B

**Non-patent literature cited in the description**

- *Modern Superabsorbent Polymer Technology*, 1998, 69-103
- *JIS Encyclopedia of Industrial Terms*, vol. 4, 2002

- Water absorption rate test method for high water-absorbent resin. *JISK7224*, 1996